# EUROPÄISCHE PATENTSCHRIFT

(11) **EP 3 439 944 B1**
(45) Veröffentlichungstag und Bekanntmachung des Hinweises auf die Patenterteilung: **28.07.2021**
(21) Anmeldenummer: 17715442.4
(22) Anmeldetag: 31.03.2017
(51) Int. Cl.: B62K 25/28, B62K 25/30, B62M 6/55, B62M 9/02, B62K 19/34

(54) **HINTERBAU EINES ELEKTROMOTORISCH BETRIEBENEN FAHRRADS MIT EINER ANTRIEBSVORRICHTUNG FÜR EIN ELEKTROMOTORISCH BETRIEBENES FAHRRAD**
REAR CONSTRUCTION OF A ELECTRIC-MOTOR-OPERATED BICYCLE WITH A DRIVE DEVICE FOR AN ELECTRIC-MOTOR-OPERATED BICYCLE
CONSTRUCTION ARRIÈRE D'UN DEUX-ROUES ACTIONNÉ PAR MOTEUR ÉLECTRIQUE AVEC UN DISPOSITIF D'ENTRAÎNEMENT POUR UN DEUX-ROUES ACTIONNÉ PAR MOTEUR ÉLECTRIQUE

(30) Priorität: 04.04.2016 DE 102016205540
(43) Veröffentlichungstag der Anmeldung: 13.02.2019
(73) Patentinhaber: QCS Quality Consult Service GmbH, 9058 Brülisau (CH)
(72) Erfinder: LAUER, Swen, 82467 Garmisch-Partenkirchen (DE); SCHEFFER, Lutz, 82467 Garmisch-Partenkirchen (DE)
(74) Vertreter: Zimmermann, Tankred Klaus
(86) Internationale Anmeldenummer: PCT/EP2017/057681
(87) Internationale Veröffentlichungsnummer: WO 2017/174454

(56) Entgegenhaltungen:
- EP-A1- 2 706 002
- EP-A1- 3 256 373
- WO-A2-2006/034213
- US-B1- 7 753 157

## Beschreibung

Die Erfindung betrifft einen Hinterbau eines elektromotorisch betriebenen Fahrrads mit einer Antriebsvorrichtung mit den Merkmalen von Anspruch 1 für ein elektromotorisch betriebenes Fahrrad, eine Verwendung gemäß Anspruch 11 einer derartigen Antriebsvorrichtung in einem elektromotorisch betriebenen Fahrrad, ein elektromotorisch betriebenes Fahrrad gemäß Anspruch 12 mit einer derartigen Antriebsvorrichtung, und einen Fahrradrahmen gemäß Anspruch 13 mit einer derartigen Antriebsvorrichtung.

Fahrräder werden heutzutage als Transport- und Fortbewegungsmittel vielfach genutzt. Es gibt unterschiedliche Bauformen von Fahrrädern. So sind beispielweise vollgefederte Fahrräder bekannt. Diese werden auch als Full-Suspension Bikes, oder kurz als Fully, bezeichnet.

Vollgefederte Fahrräder weisen einen Hauptrahmen auf, an den ein schwingend gelagerter Hinterbau angeordnet ist. Zwischen Hinterbau und Hauptrahmen ist ein Dämpfungselement, meist ein Stahlfeder- oder Luftdämpfer, vorgesehen.

Bei der Konstruktion vollgefederter Fahrräder besteht ein Zielkonflikt zwischen dem sogenannten Wippen des Hinterbaus und dem sogenannten Pedalrückschlag. Dies hängt mit dem Ein- bzw. Ausfederverhalten des Hinterbaus relativ zu dem Hauptrahmen in bestimmten Fahrdynamiksituationen zusammen.

Insbesondere müssen hierbei Fahrdynamiksituationen betrachtet werden, bei denen der Fahrer über den Antrieb, d.h. über die Tretkurbel, ein hohes Drehmoment aufbringt. Hohe Drehmomente werden insbesondere beim Anfahren, beim Bergauffahren, oder beim Beschleunigen aufgebracht. Die beim Treten aufgebrachte Kraft wird mittels der Fahrradkette von der Tretkurbel zu dem Hinterrad geleitet.

Aufgrund der beim Anfahren, Bergauffahren, Beschleunigen, etc. auftretenden dynamischen Radlastverteilung tendiert der Hinterbau zum Einfedern. Dieses Einfederverhalten des Hinterbaus ist jedoch unerwünscht, da dadurch ein hoher Anteil der Antriebsenergie verloren geht.

Daher wird heutzutage versucht, den Hinterbau derart zu konstruieren, dass dieser beim Anfahren, Beschleunigen, etc. eine Tendenz zum Ausfedern aufweist. In Abhängigkeit der Anordnung des Schwingenlagers relativ zum Hauptrahmen sowie in Abhängigkeit der Kettenzugrichtung kann dieses Ausfederverhalten beeinflusst werden. Dokument US7 753 157 B1 zeigt die Präambel des Anspruchs 1.

Ein zu starkes Ausfederverhalten führt jedoch dazu, dass aufgrund des ausfedernden Hinterbaus die Kette entgegen der Kurbelbewegung zurückgezogen wird. Daraus resultiert der sogenannte Pedalrückschlag, d.h. während der Fahrer das Pedal in die eine Richtung tritt, zieht der Hinterbau das Pedal in die entgegengesetzte Richtung.

Dieser Zielkonflikt zwischen Einfedern und Pedalrückschlag kann bei elektromotorisch betriebenen Fahrrädern, d.h. bei sogenannten E-Bikes, deutlich ausgeprägter sein. Der im E-Bike verbaute Elektromotor kann, je nach Bauform des jeweiligen E-Bikes, als alleiniges Antriebsmittel, oder auch als unterstützendes Antriebsmittel zusätzlich zu den Tretbewegungen des Fahrers, genutzt werden. Der Elektromotor kann dabei ein hohes Drehmoment erzeugen, das das durch den Fahrer mittels der Tretkurbel aufbringbare Drehmoment übersteigt.

Dementsprechend kommt es bei heutigen E-Bikes in der Regel zu verstärktem Einfedern und/oder zu einem verstärkten Pedalrückschlag.

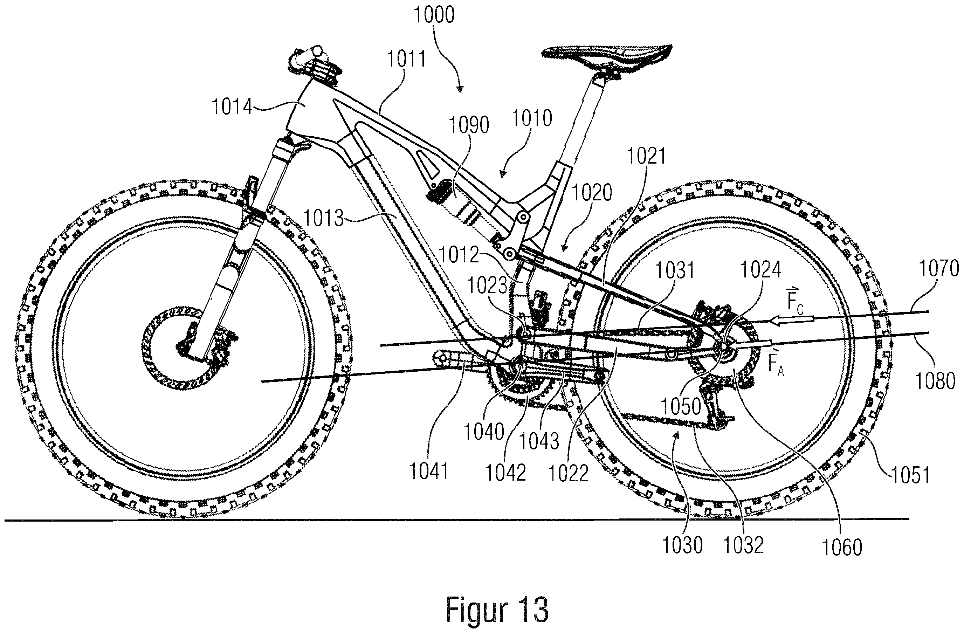

Zur Veranschaulichung der soeben beschriebenen Effekte zeigt Figur 13 ein konventionelles vollgefedertes Mountainbike 1000. Das Mountainbike 1000 weist einen Hauptrahmen 1010 und einen Hinterbau 1020 auf. Der Hauptrahmen 1010 weist ein Oberrohr 1011, ein Sattelrohr 1012, ein Unterrohr 1013 und ein Steuerrohr 1014 auf.

Der Hinterbau 1020 weist eine Sitzstrebe 1021 und eine Kettenstrebe 1022 auf. Der Hinterbau 1020 ist gelenkig mit dem Hauptrahmen 1010 verbunden. Die Kettenstrebe 1022 ist mit einem an dem Hauptrahmen 1010 angeordneten Schwingenlager 1023 verbunden. Die Sitzstrebe 1021 ist gelenkig mit einem Dämpfer 1090 verbunden. In Fahrtrichtung hinten weist der Hinterbau 1020 ein Ausfallende 1024 auf, das die Achse 1050 des Hinterrads 1051 aufnimmt.

An der Radnabe des Hinterrads 1051 ist ein Ritzelpaket 1060, auch Kassette genannt, angeordnet. Das Ritzelpaket 1060 weist mehrere Ritzel mit unterschiedlichen Durchmessern auf.

Der Hauptrahmen 1010 weist außerdem ein Tretlager 1040 auf. Durch das Tretlager 1040 hindurch erstreckt sich eine Achse bzw. Welle einer Tretkurbel 1041. Die Tretkurbel 1041 weist ein großes Kettenblatt 1042 und ein kleines Kettenblatt 1043 auf.

Zwischen den vorderen Kettenblättern 1042, 1043 und den hinteren Ritzeln des Ritzelpakets 1060 erstreckt sich eine Antriebskette 1030. Die Kette 1030 weist ein oberes Trum, bzw. Lasttrum 1031, und ein unteres Trum, bzw. Leertrum 1032, auf.

Bei einer (in Figur 13 entgegen des Uhrzeigersinns gerichteten) Rotation der Tretkurbel 1041 spannt sich die Kette 1030 am Lasttrum 1031 und leitet die Kraft an das mit der Kette 1030 in Eingriff stehende Ritzel des Ritzelpakets 1060 weiter. Diese Kraft wird auch als Kettenzugkraft F_{C} bezeichnet und verläuft entlang der Erstreckungsrichtung der gespannten Kette 1030 bzw. des Lasttrums 1031. Die Erstreckungsrichtung des Lasttrums 1031 bestimmt also die Kraftwirkungslinie 1070 der Kettenzugkraft F_{C}.

Da das Hinterrad 1051 drehbar an der Achse 1050 aufgehängt ist, ergibt sich eine auf die Achse 1050 wirkende Achskraft F_{A}, deren Kraftwirkungslinie 1080 parallel zu der Kraftwirkungslinie 1070 der Kettenzugkraft F_{C} verläuft.

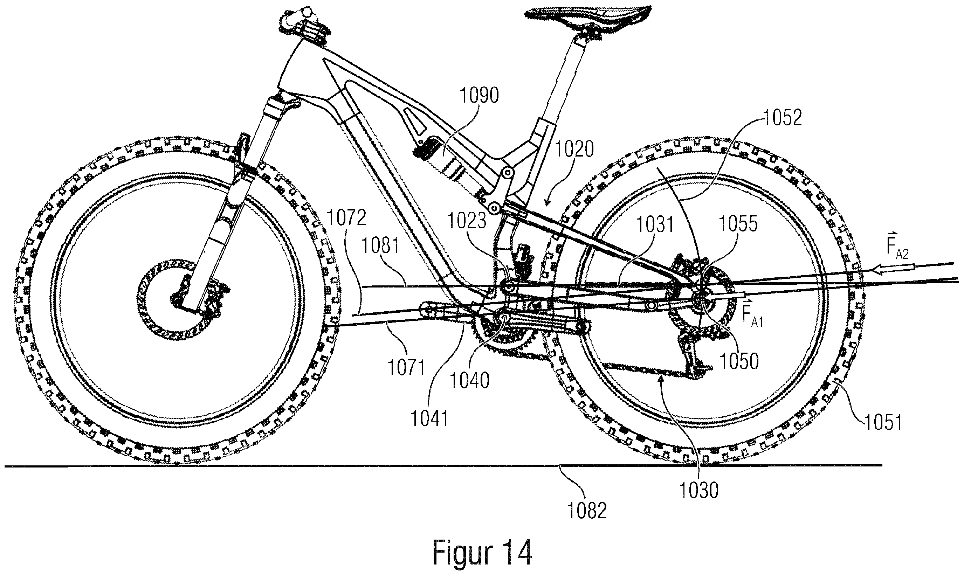

Figur 14 zeigt dasselbe konventionelle Mountainbike 1000 noch einmal. Das vollgefederte Mountainbike 1000 weist einen zwischen Hinterbau 1020 und Hauptrahmen 2 angeordneten Dämpfer 1090 auf. Figur 14 zeigt das Mountainbike 1000 in einem unbelasteten Zustand ohne Fahrer. Sobald das Mountainbike 1000 beispielsweise durch das Fahrergewicht belastet wird, federt es ein. Dabei schwenkt das Hinterrad 1051 entlang der Raderhebungskurve 1052 nach oben aus. Die Raderhebungskurve 1051 ergibt sich bei sogenannten Eingelenkern aus dem Abstand zwischen dem Schwingenlager 1023 und der Hinterachse 1050.

Generell kann der Hinterbau 1020 des Mountainbikes 1000 sowohl einfedern als auch ausfedern. Beim Einfedern schwenkt das Hinterrad 1051 entlang der Raderhebungskurve 1052 nach oben aus. Beim Ausfedern schwenkt das Hinterrad 1051 entlang der Raderhebungskurve 1052 nach unten aus.

Der Dämpfer 1090 wird bei konventionellen Mountainbikes 1000 in der Regel so eingestellt, dass dieser bei statischer Belastung durch das Fahrergewicht eines auf dem Mountainbike 1000 ruhend sitzenden oder ruhend stehenden Fahrers etwa um 10% bis 30% bezüglich des Gesamtfederwegs eingefedert ist. Dieser Bereich wird auch als Negativfederweg oder SAG bezeichnet.

Wie zuvor erwähnt, schwenkt das Hinterrad 1051 beim Einfedern entlang der Raderhebungskurve 1052 nach oben aus. Konventionelle Mountainbikes 1000 werden heutzutage so konstruiert, dass das Hinterrad 1051 im SAG so weit ausgeschwenkt ist, dass sich die Hinterachse 1050 etwa in dem eingezeichneten Konstruktionspunkt 1055 befindet. Hierbei ergibt sich eine gedachte Linie 1081 zwischen der ausgelenkten Hinterachse 1055 und dem Schwingenlager 1023. Diese Linie 1081 verläuft im SAG parallel zu der Fahrbahnoberfläche 1082.

Beim Ein- oder Ausfedern des Hinterbaus 1020 verändert sich die Winkellage dieser Linie 1081 relativ zur Fahrbahnoberfläche 1082. Der sich einstellende Winkel zwischen dieser Linie 1081 und der Fahrbahnoberfläche 1082 wird als Schrägfederwinkel bezeichnet. Im SAG stellt sich bei dem in Figur 14 gezeigten konventionellen Mountainbike 1000 also ein Schrägfederwinkel von 0° ein.

Beim Anfahren oder Beschleunigen erzeugt der Fahrer über die Tretkurbel 1041 ein Drehmoment, das mittels der Kette 1030, der Kassette 1060 und der Radnabe auf das Hinterrad 1051 übertragen wird. Insbesondere in Fahrsituationen wie beim Anfahren, Beschleunigen oder Bergauffahren erzeugt der Fahrer ein verhältnismäßig hohes Drehmoment.

Darüber hinaus erzeugt ein auf dem Fahrrad 1000 sitzender bzw. stehender Fahrer einen hohen Schwerpunkt, der noch dazu horizontal in Richtung des Hinterrads 1051 verschoben ist. Beim Anfahren, Beschleunigen oder Bergauffahren bewirkt die Massenträgheit des Gesamtsystems aus Fahrer und Fahrrad 1000, eine dynamische Radlastverteilung, d.h. der Massenschwerpunkt wandert noch weiter nach hinten, d.h. in Richtung Hinterrad 1051. Bei einem nicht abgestimmten Fahrrad bewirkt diese dynamische Radlastverteilung dass der Hinterbau 1020 einfedert. Dieses Verhalten kann auch mit Anfahrmoment-Nicken oder Squat bezeichnet werden.

Wie eingangs erwähnt, ist es heutzutage Stand der Technik, dieses Anfahrmoment-Nicken mittels des Kettenzugs abzustützen. Dabei sorgt der Kettenzug für ein Ausfedern des Hinterbaus 1020. Dabei wird konstruktionstechnisch versucht, das mittels des Kettenzugs bedingte Ausfedern in demselben Maße zu realisieren, in dem auch der Hinterbau aufgrund der Massenträgheit ansonsten einfedern würde. Man versucht also das durch die dynamische Radlastverteilung bedingte Einfedern des Hinterbaus durch ein betragsgleiches, mittels des Kettenzugs bedingtes, Ausfedern zu kompensieren. Dies soll an dem in Figur 14 gezeigten konventionellen Mountainbike 1000 verdeutlicht werden.

Wie eingangs erwähnt, hängt die Richtung der auf die Achse 1050 wirkenden Kraft F_{A} unter anderem von der Kettenzugrichtung entlang der Kraftwirkungslinie 1070 (Figur 13) der Kraft F_{C} ab. In einem nicht belasteten Zustand befindet sich die Hinterachse 1050 zunächst in einer in Figur 14 gezeigten unteren Position, in der die Kraft F_{A1} entlang der Kraftwirkungslinie 1071 auf die Achse 1050 wirkt. In einem eingefederten Zustand, und insbesondere im SAG, befindet sich dich Hinterachse 1050 in einer ausgelenkten oberen Position 1055, wobei die Kraft F_{A2} auf die Hinterachse 1050 wirkt.

Die Kraft F_{A2} verläuft entlang der Kraftwirkungslinie 1072. Wie in Figur 14 zu erkennen ist, verläuft die Kraftwirkungslinie 1072 unterhalb des Schwingenlagers 1023.

Wenn der Fahrer nun, ausgehend von der SAG-Position, in die Pedale tritt und ein Antriebsdrehmoment erzeugt, wirkt die entlang der Kettenzugrichtung verlaufende Kraft F_{A2} auf die Hinterachse 1050 im Konstruktionspunkt 1055. Da die Kraftwirkungslinie 1072, wie zuvor erwähnt, unterhalb des Schwingenlagers 1023 verläuft, bewirkt die Kraft F_{A2} ein Ausfedern des Hinterbaus 1020. Die Kraft F_{A2} versucht also die Hinterachse 1050 unterhalb des Schwingenlagers 1023 hindurch zu ziehen, sodass sich das Hinterrad 1051 entlang der Raderhebungskurve 1052 nach unten bewegt. Diese der Einfederbewegung (Anfahrmoment-Nicken) entgegengerichtete Ausfederbewegung wird auch als Anfahrmoment-Nickabstützung oder Anti-Squat bezeichnet.

Vorzugsweise wird hierbei konstruktiv versucht, das Schwingenlager 1023 relativ zu der Kraftwirkungslinie 1072 der auf die Achse 1050 wirkenden Kraft F_{A2} derart anzuordnen, dass der Betrag und die Richtung der Kettenzugkraft ein Ausfedern bewirken, dass dem beim Anfahren und dergleichen auftretenden Einfedern entgegenwirkt und vorzugsweise vollständig unterdrückt. Wenn das durch den Kettenzug bewirkte Ausfedern das Anfahrmoment-Nicken (Einfedern) vollständig kompensiert, spricht man auch von einem neutralen Fahrwerk oder auch von 100% Anti-Squat.

Die Wirkungsweise des Kettenzugs welche eine wichtige Komponente bei konventionellen vollgefederten Mountainbikes für das Antisquat-Verhalten darstellt, lässt sich einfach veranschaulichen wenn man die winkelmäßige Abweichung der Kettenzugrichtung in Verbindung mit der Höhe der Kettenzugkraft zur Raderhebungsbahn-Normalen beschreibt.

Die Raderhebungsbahn-Normale ist eine Gerade, die im 90° Winkel zur Einfederungsrichtung steht, d.h. bei einem Eingelenker geht somit die Normale immer durch den Schwingendrehpunkt 1023.

Die Raderhebungsbahn-Normale (senkrechte Linie zur Einfederungsrichtung) beschreibt gleichzeitig den Schrägfederwinkel (Winkel zwischen Raderhebungsbahn-Normale und Fahrbahnoberfläche)

Weicht die Kettenzugrichtung von der Bahnnormalen ab, wird eine einfedernd oder ausfedernd wirkende Kraft in die Hinterradfederung eingeleitet. Je stärker die Kettenzugkraft und je größer die Winkelabweichung zur Bahn-Normalen desto stärker die Reaktion auf den Hinterbau. Daher ist das Antisquat-Verhalten bei einem konventionellen Fahrrad je nach eingelegtem Gang stark unterschiedlich, da sich die Kettenzugkraft in Richtung und Betrag in jedem Gang unterscheidet.

Als Beispiel soll hier eine Rechnung mit einer von einem Fahrer aufgebrachten Antriebsleistung von 200 Watt dienen. Dies entspricht einer Kurbelkraft von 140N bei 60 U/min:
Fall 1: Gangkombination 22 Zähne vorne und 34 Zähne hinten (typ. Berggang)
   - hier stellt sich eine Kettenzugkraft von 722N und eine Antriebskraft von 149N ein, was wiederum zu einer Antisquatwirkung von 120% führt (zu viel Antisquat bzw. Überkompensierung)
Fall 2: Gangkombination 36 Zähne vorne und 11 Zähne hinten (typ. Schnellfahrgang)
   - hier stellt sich eine Kettenzugkraft von 543N und eine Antriebskraft von 34N ein, was wiederum zu einer Antisquatwirkung von 57% führt (zu wenig Antisquat bzw. Unterkompensation)

Als Fazit kann gesagt werden, dass die Kettenzugkraft je nach eingelegtem Gang stark schwankt. Gleichzeitig schwankt die in den Boden eingeleitete Haftreibungskraft (Antriebskraft) durch die unterschiedlichen Übersetzungen ebenfalls stark.

In der Summe beider Effekte schwankt bei einem konventionellen Mountainbike die Antisquat-Wirkung je nach eingelegtem Gang relativ stark. Die Bandbreite der Antisquat-Wirkung liegt bei einem konventionellen MTB zwischen 0-200%

So herrscht üblicherweise im Berggang (Ritzelkombination z.B vorne 22 Zähne und hinten 34 Zähne) ein starker Kettenzug, dessen Winkel in Relation zur Raderhebungsbahn-Normalen nach unten gerichtet ist. Dies führt zu einer ausfedernd reagierenden Hinterradfederung, d.h. mehr als 100% Antisquat. In Schnellfahrgängen (Ritzelkombination z.B. vorne 36 und hinten 11) herrscht ein geringerer Kettenzug wobei die Wirkrichtung der Kettenzugkraft relativ zur Raderhebungsbahn-Normalen nach oben gerichtet ist. Dies erzeugt ein unerwünschtes Einfedern des Hinterbaus beim Pedalieren.

Aufgrund dieser Zusammenhänge ist bei einem konventionellen vollgefederten Fahrrad ein erwünschtes möglichst genaues 100% Antisquat nur bei einer einzigen bestimmten Gangkombination vorhanden.

Wie eingangs mit Bezug auf die Figuren 13 und 14 erwähnt, ist man bestrebt, das Mountainbike 1000 so zu konstruieren, dass die Kraftwirkungslinie 1072 und das Schwingenlager 1023 relativ zueinander so ausgerichtet sind, dass der Kettenzug zu einer AusfederBewegung führt, dessen Betrag dem Betrag des Anfahrmoment-Nickens (Einfedern) entspricht.

Um dies zu realisieren, werden konventionelle Mountainbikes 1000 so konstruiert, dass sie im SAG einen Schrägfederwinkel von 0° aufweisen, d.h. die gedachte Verbindungslinie 1081 zwischen dem Schwingenlager 1023 und der Hinterachse 1050 ist parallel zur Fahrbahnoberfläche 1082. Dies bietet einen guten Ausgangspunkt, um die Richtung der Kraftwirkungslinie 1072 relativ zu dem Schwingenlager 1023 so auszulegen, dass eine hohe Anfahrmoment-Nickabstützung erreicht wird.

Das Vorsehen eines Schrägfederwinkels von 0° hat zudem den Vorteil, dass Antriebseinflüsse, die durch die Kinematik des Hinterbaus bedingt sind, weitestgehend außer Acht gelassen werden können, sodass die Anfahrmoment-Nickabstützung, d.h. der Betrag des Ausfederns, vorteilhafter Weise einzig und alleine durch den Kettenzug (Betrag und Richtung) bestimmt werden kann.

Es besteht hierbei jedoch immer der eingangs erwähnte Zielkonflikt zwischen der mittels des Kettenzugs bedingten Anfahrmoment-Nickabstützung und dem sogenannten Pedalrückschlag. Durch das mittels des Kettenzugs bewusst herbeigeführte Ausfedern, bewegt sich das Hinterrad 1051 entlang der Raderhebungskurve 1052 nach unten. Dadurch ergibt sich eine horizontale Längenänderung zwischen der Hinterradachse 1050 und dem Tretlager. Beim Ausfedern vergrößert sich dieser horizontale Abstand zwischen Hinterradachse 1050 und Tretlager 1040. Dadurch möchte sich auch das Lasttrum 1031 der Kette 1030 entsprechend längen. Da die Kette 1030 aber verhältnismäßig starr ist, zieht die Kette 1030 die Kurbel 1040 entgegen der eigentlichen Tretrichtung nach hinten.

Konventionelle Mountainbikes 1000 weisen also üblicherweise im SAG einen Schrägfederwinkel (Raderhebungsbahn-Normale) von 0 Grad auf, d.h. die Raderhebungsbahn-Normale ist parallel zur Fahrbahnoberfläche. Der Antisquat wird bei konventionellen vollgefederten Mountainbikes 1000 ausschließlich über den Kettenzug erzeugt, d.h. ist der Kettenzug nach unten gerichtet, ergibt sich ein Antisquat-Effekt. Ist der Kettenzug nach oben gerichtet, ergibt sich ein Squateffekt. Dabei hängt die Kettenzugrichtung von der gewählten Gangkombination ab.

Eine Abweichung der Kettenzugrichtung von der Bahn-Normalen erzeugt aber wiederum immer eine unerwünschte Wirkung auf die Kurbel. Ist der Kettenzug-Vektor in Relation zur Bahn-Normalen nach unten gerichtet, ergibt sich beim Einfedern eine Kurbel-Rückdrehung, d.h. Pedal-Rückschlag. Ist der Kettenzug-Vektor in Relation zur Bahn-Normalen nach oben gerichtet, ergibt sich beim Einfedern eine Kurbel-Vordrehung, d.h. ein sogenannter Pedal-Vorschlag. Es besteht heutzutage also ein Zielkonflikt zwischen Antisquat und Pedalrückschlag.

Die Figuren 13 und 14 bezogen sich auf sogenannte Eingelenker, bei denen an einem Ende der Kettenstrebe 1022 das Ausfallende 1024 zum Aufnehmen des Hinterrads 1051 angeordnet ist, und an dem gegenüberliegenden Ende der Kettenstrebe 1022 das Schwingenlager 1023 zur gelenkigen Lagerung an dem Hauptrahmen 1010 vorgesehen ist.

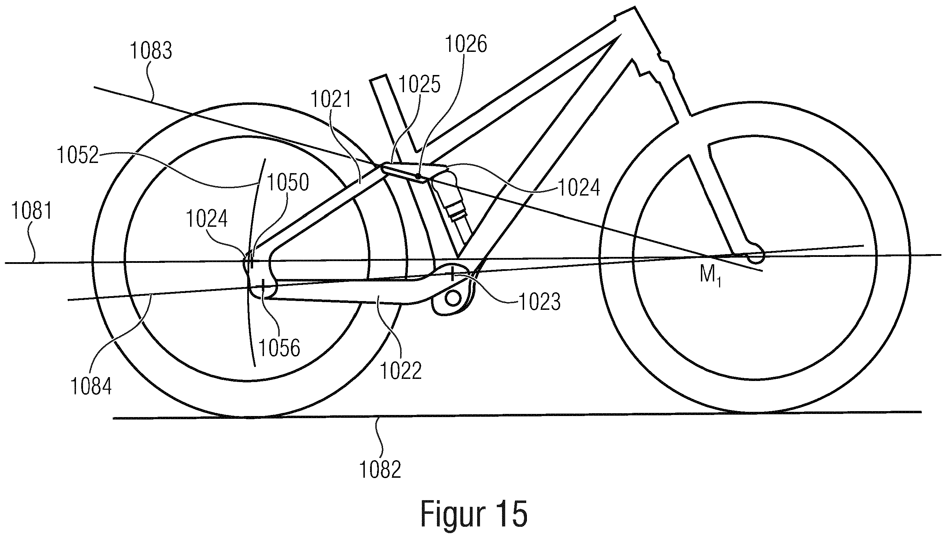

Andere bekannte Konzepte, wie beispielsweise in Figur 15 gezeigt, beschreiben einen Mehrgelenker, bei denen ein zusätzliches Gelenk 1056, beispielsweise unterhalb des Ausfallendes 1024 im Bereich der Kettenstrebe 1022, vorgesehen ist. Dadurch erreicht man eine andere Raderhebungskurve 1052 im Vergleich zum vorher beschriebenen Eingelenker. Die Raderhebungskurve 1052 folgt hier nicht mehr einer einfachen Kreisbahn um das Schwingenlager 1023 mit einem Radius, der sich aus dem Abstand des Schwingenlagers 1023 zum Kettenstrebenlager 1050 ergibt. Stattdessen wird die Raderhebungskurve 1052 mittels des Momentanpols ermittelt, wobei versucht wird, eine möglichst senkrecht nach oben gerichtete Raderhebungskurve ohne nennenswerte Krümmung zu schaffen.

Der Momentanpol M₁ ist der Schnittpunkt der beiden Geraden bzw. der beiden sogenannten Lenker 1083, 1084. Der erste Lenker 1083 ist die Gerade, die durch das zusätzliche Lager 1056 und durch das Schwingenlager 1023 verläuft. Der zweite Lenker 1084 ist die Gerade, die durch das Gelenk 1025 zwischen Hinterbau (Sitzstrebe 1021) und Wippe 1024 sowie durch die Anlenkung 1026 der Wippe 1024 am Hauptrahmen 1010 verläuft.

Zur Konstruktion der Geraden 1081 wird eine Verbindung zwischen Hinterachslager 1050 und dem Momentanpol M₁ gezogen. Auch bei dem in Figur 15 gezeigten Mehrgelenker wird der Rahmen so konstruiert, dass die Linie 1081 parallel zur Fahrbahnebene 1082 ist, wenn sich das Fahrrad im SAG befindet. In anderen Worten wird auch der Mehrgelenker so konstruiert, dass sich ein Schrägfederwinkel von 0° ergibt, d.h. Anti-Squat wird über den Kettenzug geregelt.

Bei konventionellen Fahrrädern, wie bei den soeben beschriebenen Mountainbikes 1000, ist das Vorsehen einer Anfahrmoment-Nickabstützung mittels Kettenzug sehr gut realisierbar, da die vom Fahrer aufgebrachte Tretkraft, und somit das an das Hinterrad eingeleitete Antriebsdrehmoment, für die Konstrukteure sehr gut abschätzbar ist.

Auch elektromotorisch unterstützte bzw. betriebene E-Bikes werden heutzutage so konstruiert, dass die Anfahrmoment-Nickabstützung mittels des Kettenzugs realisiert wird. Allerdings sorgt gerade in Fahrsituationen, in denen ein großes Antriebsdrehmoment wirkt, wie z.B. beim Anfahren, Beschleunigen oder Bergauffahren, das zusätzliche Drehmoment des Elektromotors dafür, dass die Hinterbauten konventioneller Fahrräder übermäßig stark ausfedern. Dies führt einerseits zu einem ungewohnten und teils unsicheren Fahrverhalten des Fahrrads und zum anderen zu einem starken Pedalrückschlag.

Wenn also das konventionelle Fahrrad so konstruiert wird, dass die Anfahrmoment-Nickabstützung für den Antrieb mittels Muskelkraft sehr gut funktioniert, federt der Hinterbau beim Zuschalten des Elektromotors in diesem Fall zu stark aus. Wird der Hinterbau eines konventionellen Fahrrads hingegen auf eine Anfahrmoment-Nickabstützung für das Drehmoment des Elektromotors hin optimiert, würde der Hinterbau beim Treten zu stark einfedern. Deshalb müssen hier heutzutage Kompromisse eingegangen werden, um beide Situationen zumindest ansatzweise zufriedenstellend abzudecken.

Es ist daher erstrebenswert, ein Antriebskonzept für ein E-Bike zu konzipieren, dass die erwähnten Nachteile des Stands der Technik adressiert und die bestehenden Konzepte verbessert.

Diese Aufgabe wird erfindungsgemäß durch einen Hinterbau eines elektromotorisch betriebenen Fahrrads mit einer Antriebsvorrichtung mit den Merkmalen von Anspruch 1 gelöst.

Der erfindungsgemässe Hinterbau eines elektromotorisch betriebenen Fahrrads mit einer Antriebsvorrichtung ist zur Verwendung in E-Bikes, und insbesondere in vollgefederten E-Bikes, vorgesehen. Das erfindungsgemäße Konzept sieht vor, eine für derartige E-Bikes geeignete Anfahrmoment-Nickabstützung teilweise mittels Kettenzug und teilweise mittels einer speziellen Hinterbaukinematik bereitzustellen. Dabei sorgt die vorliegende Erfindung dafür, dass ein möglichst neutrales Hinterbauverhalten realisiert werden kann, und zwar sowohl beim Treten als auch beim Zuschalten des Elektromotors. Erfindungsgemäß ist der Getriebeabgang bzw. der Abtrieb zu einem Antrieb, d.h. zur Tretkurbel, versetzt angeordnet. Zusätzlich ist das Schwingenlager in der Nähe des Abtriebs angeordnet. In der Nähe des Abtriebs bedeutet, dass das Schwingenlager näher an dem Abtrieb als an dem Antrieb angeordnet ist. In anderen Worten ausgedrückt ist ein radialer Abstand zwischen einer Mittelachse des Schwingenlagers und einer Mittelachse der Abtriebswelle kleiner als ein radialer Abstand zwischen der Mittelachse des Schwingenlagers und einer Mittelachse der ersten Antriebswelle. Durch diese Kombination aus einem zum Antrieb versetzten Abtrieb und der Anordnung des Schwingenlagers in unmittelbarer Nähe des Abtriebs ergibt sich die Möglichkeit, eine Anfahrmoment-Nickabstützung mittels Kettenzug und mittels der Hinterbaukinematik, d.h. mittels der Anlenkung des Hinterbaus relativ zu dem Hauptrahmen, zu realisieren. Dies gilt sowohl für Eingelenker als auch für Mehrgelenker. Durch den radial versetzten Abtrieb ergibt sich ein verhältnismäßig steiler Winkel der Kettenstrebe, was wiederum zu einem stärkeren Ausfedern des Hinterbaus führt. Durch diese kinematische Maßnahme kann das durch das zusätzliche Drehmoment des Elektromotors bedingte Nicken abgestützt werden. Gleichzeitig sorgt die Anordnung des Abtriebs in der Nähe des Schwingenlagers dafür, dass die beim Treten benötigte Anfahrmoment-Nickabstützung weiterhin auch mittels Kettenzug beeinflussbar ist bzw. bleibt.

Beispielsweise kann das Schwingenlager derart an dem Hauptrahmen positioniert sein, dass das Fahrrad einen Schrägfederwinkel von 5° bis 30°, vorzugsweise von 10° bis 20° und weiter bevorzugt von etwa 15° aufweist, wenn das Fahrrad einer zu inem Negativfederwegbereich zwischen 10% und 35% des Gesamtfederwegs führenden statischen Belastung ausgesetzt ist. In anderen Worten weist das Fahrrad einen Schrägfeder-winkel in den angegebenen Bereichen auf, wenn es sich im SAG befindet. Das Vorsehen eines Schrägfederwinkels in den angegebenen Bereichen führt zu einer Fahrwerks-kinematisch bedingten Anfahrmoment-Nickabstützung bei erhöhtem Drehmoment und ist insbesondere bei Eingelenkern vorteilhaft.

Die hierin beschriebene Erfindung ist insbesondere für Mehrgelenker vorteilhaft, bei denen ein Momentanpol als ein momentaner Drehpunkt konstruiert wird. Gemäß einer solchen Ausführungsform, bei der der Hinterbau als ein Mehrgelenker mit einem Momentanpol als momentaner Drehpunkt ausgebildet ist, kann der Hinterbau derart an dem Hauptrahmen positioniert sein, dass das Fahrrad einen Schrägfederwinkel von 5° bis 30°, vorzugsweise von 10° bis 20° und weiter bevorzugt von etwa 15° aufweist, wenn das Fahrrad einer zu einem Negativfederwegbereich zwischen 10% und 35% des Gesamtfederwegs führenden statischen Belastung ausgesetzt ist. In anderen Worten weist das Fahrrad einen Schrägfederwinkel in den angegebenen Bereichen auf, wenn es sich im SAG befindet. Das Vorsehen eines Schrägfederwinkels in den angegebenen Bereichen führt zu einer Farhwerks-kinematisch bedingten Anfahrmoment-Nickabstützung bei erhöhtem Drehmoment und ist insbesondere bei Mehrgelenkern vorteilhaft.

Gemäß einer Ausführungsform kann die radiale Beabstandung zwischen der Mittelachse der ersten Antriebswelle und der Mittelachse der Abtriebswelle 200 mm bis 300 mm, und vorzugsweise 100 mm bis 200 mm betragen. Anders ausgedrückt beträgt der Abstand zwischen der Tretkurbelwelle und dem Abtrieb 200 mm bis 300 mm, und vorzugsweise 100 mm bis 200 mm. Ein solcher Versatz zwischen Antrieb und Abtrieb hat sich als besonders vorteilhaft herausgestellt, um eine geeignete Anfahrmoment-Nickabstützung bereitzustellen.

Gemäß einer weiteren Ausführungsform kann die radiale Beabstandung zwischen der Mittelachse des Schwingenlagers und der Mittelachse der Abtriebswelle weniger als 200 mm, vorzugsweise weniger als 100 mm, und weiter bevorzugt weniger als 50 mm betragen. In anderen Worten beträgt der Versatz bzw. der Abstand zwischen dem Schwingenlager und dem Abtrieb weniger als 200 mm, vorzugsweise weniger als 100 mm, und weiter bevorzugt weniger als 50 mm. Das Schwingenlager ist somit also in der Nähe des Abtriebs angeordnet. Diese Ausführungsform gilt natürlich unter Einhaltung des Erfindungskonzepts gemäß dem der Abstand zwischen der radiale Abstand zwischen der Mittelachse des Schwingenlagers und der Mittelachse der Abtriebswelle kleiner ist als der radiale Abstand zwischen der Mittelachse des Schwingenlagers und der Mittelachse der ersten Antriebswelle. Gemäß dieser Ausführungsform kann also das Schwingenlager mit einem Radius von weniger als 200 mm, vorzugsweise weniger als 100 mm, und weiter bevorzugt weniger als 50 mm um den Abtrieb herum angeordnet werden. Dies ermöglicht ein gewisses Feintuning bzw. eine Feinjustage des Ausmaßes des Einfederns bzw. Ausfederns des Hinterbaus, d.h. der Anfahrmoment-Nickabstützung.

Gemäß eines weiteren Ausführungsbeispiels kann die Mittelachse des Schwingenlagers bezüglich einer zur Fahrbahnoberfläche parallelen Ebene oberhalb der Mittelachse des Abtriebs angeordnet sein. Das Schwingenlager kann also in einem Halbkreis oberhalb des Abtriebs angeordnet werden. In dem oberen Halbkreis kann, unter Beachtung der Kettenzugrichtung, das Maß des Ausfederns des Hinterbaus feinjustiert werden.

Gemäß eines weiteren Ausführungsbeispiels kann die Mittelachse des Schwingenlagers bezüglich einer zur Fahrbahnebene parallelen Ebene unterhalb der Mittelachse des Abtriebs angeordnet sein. Das Schwingenlager kann also in einem Halbkreis unterhalb des Abtriebs angeordnet werden. In dem unteren Halbkreis kann, unter Beachtung der Kettenzugrichtung, das Maß des Einfederns des Hinterbaus feinjustiert werden.

Gemäß einer Ausführungsform kann der radiale Abstand zwischen der Mittelachse der Abtriebswelle und der Mittelachse des Schwingenlagers gleich Null sein, sodass die Mittelachse der Abtriebswelle und die Mittelachse des Schwingenlagers konzentrisch angeordnet sind. In anderen Worten besteht zwar ein Versatz bzw. ein radialer Abstand zwischen dem ersten Antrieb (Tretkurbel) und dem Abtrieb, sowie zwischen dem Schwingenlager und dem Abtrieb. Der Versatz bzw. der radiale Abstand zwischen dem Abtrieb und dem Schwingenlager ist gemäß dieser Ausführungsform jedoch gleich Null, d.h. das Schwingenlager und der Abtrieb sind konzentrisch bzw. koaxial angeordnet. Die Bedingung aus Anspruch 1 ist trotzdem weiterhin erfüllt, da der Versatz bzw. der radiale Abstand zwischen dem Abtrieb und dem Schwingenlager kleiner ist als der Versatz bzw. der radiale Abstand zwischen dem ersten Antrieb (Tretkurbel) und dem Schwingenlager. Das heißt, das Schwingenlager ist näher an dem Abtrieb (koaxial) als an dem Antrieb angeordnet. Durch diese koaxiale Anordnung des Abtriebs und des Schwingenlagers können Antriebseinflüsse möglichst gering gehalten werden, da es weder beim Einfedern noch beim Ausfedern zu einer Kettenlängung kommt, die einen unerwünschten Pedalrückschlag verursachen würde.

Gemäß einer weiteren Ausführungsform können der Abtrieb und der Elektro-Mittelmotor derart zueinander angeordnet sein, dass die Mittelachse des Abtriebs und die Mittelachse einer Abtriebswelle des Elektro-Mittelmotors konzentrisch angeordnet sind. In anderen Worten weisen der Elektro-Mittelmotor und der Abtrieb eine gemeinsame Achse bzw. Ausgangswelle auf. Der Abtrieb ist also direkt an dem Elektro-Mittelmotor angeordnet. So können der Abtrieb und der Elektromotor platzsparend innerhalb der Antriebsvorrichtung, und insbesondere innerhalb eines Gehäuses der Antriebsvorrichtung, angeordnet werden.

Gemäß einer weiteren Ausführungsform kann der Abtrieb mittels eines Kraftübertragungsmittels, insbesondere mittels einer Kette oder eines Zahnriemens oder eines Keilriemens, die Antriebskraft an das anzutreibende Rad des Fahrrads übertragen, und das Kraftübertragungsmittel kann derart zwischen dem Abtrieb und dem Rad angeordnet sein, dass mittels Zugkraftausübung auf ein Lasttrum des Kraftübertragungsmittels eine Kraft auf die Hinterachse ausgeübt wird, deren Kraftwirkungslinie unterhalb der Mittelachse des Schwingenlagers oder unterhalb des Momentanpols verläuft, wenn das Fahrrad einer zu einem Negativfederwegbereich zwischen 10% und 35% des Gesamtfederwegs führenden statischen Belastung ausgesetzt ist. Wenn sich also das Fahrrad im SAG befindet, verläuft das Kraftübertragungsmittel derart zwischen Hinterrad und Kurbel, dass die Zugrichtung des Kraftübertragungsmittels eine Kraft auf die Hinterradachse bewirkt, deren Kraftwirkungslinie unterhalb des Schwingenlagers entlang läuft. Diese Kraft führt somit zu einem Ausfedern des Hinterbaus. So ist beispielsweise bei einem Kettenantrieb ein Ritzelpaket mit in der Regel neun bis elf unterschiedlich großen Ritzeln an der Hinterradnabe angeordnet. An der Kurbel sind ein bis drei Kettenblätter angeordnet. Der Hinterbau federt am stärksten aus, d.h. das größte Anti-Squat-Verhalten wird dann erreicht, wenn die Kettenzugrichtung einen großen Winkel gegenüber dem Schwingenlager aufweist, z.B. wenn die Kette auf dem kleinsten Kettenblatt und dem größten Ritzel läuft. Die erwähnte Ausführungsform bezieht sich auf eine Kettenzugrichtung, bei der die Kette auf dem kleinsten Kettenblatt vorne und auf einem der fünf größten Ritzel hinten läuft.

Gemäß einer Ausführungsform kann die Antriebsvorrichtung unbeweglich an dem Hauptrahmen angeordnet sein. Bei dem vorgeschlagenen Elektro-Mittelmotor kann die Antriebsvorrichtung fest, d.h. unbeweglich zwischen dem Unterrohr, dem Tretlagergehäuse und gegebenenfalls dem Sattelrohr angeordnet sein. Die Antriebsvorrichtung stützt sich also an dem Hauptrahmen ab. Hiervon zu unterscheiden sind Antriebskonzepte mit in den Radnaben angeordneten elektromotorischen Antriebsvorrichtungen, sowie von Antriebskonzepten mit Triebsatzschwinge. Bei Letzterem ist die elektromotorische Antriebsvorrichtung nicht in bzw. an dem Hauptrahmen selbst, sondern in der Schwinge angeordnet. Die elektromotorische Antriebseinheit stützt sich hier an der beweglich an dem Rahmen angeordneten Schwinge ab. Somit ist dort die elektromotorische Antriebseinheit, über die Schwinge, beweglich an dem Hauptrahmen angeordnet. Wenn man also bei einem erfindungsgemäßen Hauptrahmen einen Hinterbau bzw. eine Hinterbauschwinge entfernt, so ist die elektromotorische Antriebseinheit dann immer noch an dem Hauptrahmen angeordnet. Wenn man hingegen bei einer Triebsatzschwinge den Hinterbau bzw. die Hinterbauschwinge vom Hauptrahmen entfernt, dann weist der Hauptrahmen keine elektromotorische Antriebseinheit mehr auf, da diese ja in der Schwinge integriert ist.

Ein zweiter Aspekt der Erfindung betrifft eine Verwendung einer Antriebsvorrichtung gemäß einer der oben genannten Ausführungsformen in einem elektromotorisch betriebenen Fahrrad.

Ein dritter Aspekt der Erfindung betrifft ein elektromotorisch betriebenes Fahrrad mit einer Antriebsvorrichtung gemäß einer der oben genannten Ausführungsformen.

Gemäß einer ersten Ausführungsform des dritten Aspekts wird ein elektromotorisch betriebenes Fahrrad mit einem ein Schwingenlager aufweisenden Hauptrahmen und einem an dem Schwingenlager angeordneten Hinterbau sowie mit einer Antriebsvorrichtung für ein derartiges elektromotorisch betriebenes Fahrrad vorgeschlagen, wobei die Antriebsvorrichtung aufweist: eine Tretkurbel als ein erster Antrieb zum Bereitstellen einer ersten Antriebskraft, wobei der erste Antrieb eine erste Antriebswelle aufweist, einen Elektro-Mittelmotor als ein zweiter Antrieb zum Bereitstellen einer zweiten Antriebskraft, und einen Abtrieb mit einer Abtriebswelle, wobei der Abtrieb ausgebildet ist, um die erste und/oder die zweite Antriebskraft aufzunehmen und an das anzutreibende Rad des Fahrrads abzugeben, wobei die Mittelachse der Abtriebswelle von der Mittelachse der ersten Antriebswelle radial beabstandet ist und die Abtriebswelle relativ zu dem Schwingenlager derart angeordnet ist, dass ein radialer Abstand zwischen der Mittelachse des Schwingenlagers und der Mittelachse der Abtriebswelle kleiner ist als ein radialer Abstand zwischen der Mittelachse des Schwingenlagers und der Mittelachse der ersten Antriebswelle.

Als Beispiel wird ein elektromotorisch betriebenes Fahrrad mit einer Antriebsvorrichtung nach der ersten Ausführungsform vorgeschlagen, wobei das Schwingenlager derart an dem Hauptrahmen positioniert ist, dass das Fahrrad einen Schrägfederwinkel von 5° bis 30°, vorzugsweise von 10° bis 20° und weiter bevorzugt von etwa 15° aufweist, wenn das Fahrrad einer zu einem Negativfederwegbereich zwischen 10% und 35% des Gesamtfederwegs führenden statischen Belastung ausgesetzt ist.

Erfindungsgemäß wird ein elektromotorisch betriebenes Fahrrad mit einer Antriebsvorrichtung nach der ersten oder der zweiten Ausführungsform vorgeschlagen, wobei der Hinterbau als ein Mehrgelenker mit einem Momentanpol als momentaner Drehpunkt ausgebildet ist, und der Hinterbau derart an dem Hauptrahmen positioniert ist, dass das Fahrrad einen Schrägfederwinkel von 5° bis 30°, vorzugsweise von 10° bis 20° und weiter bevorzugt von etwa 15° aufweist, wenn das Fahrrad einer zu einem Negativfederwegbereich zwischen 10% und 35% des Gesamtfederwegs führenden statischen Belastung ausgesetzt ist.

Gemäß einer vierten Ausführungsform wird ein elektromotorisch betriebenes Fahrrad mit einer Antriebsvorrichtung nach einer der vorhergehenden Ausführungsformen vorgeschlagen, wobei die radiale Beabstandung zwischen der Mittelachse der ersten Antriebswelle und der Mittelachse der Abtriebswelle 200 mm bis 300 mm, und vorzugsweise 100 mm bis 200 mm beträgt.

Gemäß einer fünften Ausführungsform wird ein elektromotorisch betriebenes Fahrrad mit einer Antriebsvorrichtung nach einer der vorhergehenden Ausführungsformeri vorgeschlagen, wobei die radiale Beabstandung zwischen der Mittelachse des Schwingenlagers und der Mittelachse der Abtriebswelle weniger als 200 mm, vorzugsweise weniger als 100 mm, und weiter bevorzugt weniger als 50 mm beträgt.

Gemäß einer sechsten Ausführungsform wird ein elektromotorisch betriebenes Fahrrad mit einer Antriebsvorrichtung nach einer der vorhergehenden Ausführungsformen vorgeschlagen, wobei die Mittelachse des Schwingenlagers bezüglich einer zur Fahrbahnoberfläche parallelen Ebene oberhalb der Mittelachse des Abtriebs angeordnet ist.

Gemäß einer siebten Ausführungsform wird ein elektromotorisch betriebenes Fahrrad mit einer Antriebsvorrichtung nach einer der ersten bis fünften Ausführungsformen vorgeschlagen, wobei die Mittelachse des Schwingenlagers bezüglich einer zur Fahrbahnebene parallelen Ebene unterhalb der Mittelachse des Abtriebs angeordnet ist.

Gemäß einer achten Ausführungsform wird ein elektromotorisch betriebenes Fahrrad mit einer Antriebsvorrichtung nach einer der ersten bis fünften Ausführungsformen vorgeschlagen, wobei der radiale Abstand zwischen der Mittelachse der Abtriebswelle und der Mittelachse des Schwingenlagers gleich Null ist, sodass die Mittelachse der Abtriebswelle und die Mittelachse des Schwingenlagers konzentrisch angeordnet sind.

Gemäß einer neunten Ausführungsform wird ein elektromotorisch betriebenes Fahrrad mit einer Antriebsvorrichtung nach einer der vorhergehenden Ausführungsformen vorgeschlagen, wobei der Abtrieb und der Elektro-Mittelmotor derart zueinander angeordnet sind, dass die Mittelachse des Abtriebs und die Mittelachse einer Abtriebswelle des Elektro-Mittelmotors konzentrisch angeordnet sind.

Gemäß einer zehnten Ausführungsform wird ein elektromotorisch betriebenes Fahrrad mit einer Antriebsvorrichtung nach einer der vorhergehenden Ausführungsformen vorgeschlagen, wobei der Abtrieb mittels eines Kraftübertragungsmittels, insbesondere mittels einer Kette oder eines Zahnriemens oder eines Keilriemens, die Antriebskraft an das anzutreibende Rad des Fahrrads überträgt, und das Kraftübertragungsmittel derart zwischen dem Abtrieb und dem Rad angeordnet ist, dass mittels Zugkraftausübung auf ein Lasttrum des Kraftübertragungsmittels eine Kraft auf die Hinterachse ausgeübt wird, deren Kraftwirkungslinie unterhalb der Mittelachse des Schwingenlagers oder unterhalb des Momentanpols verläuft, wenn das Fahrrad einer zu einem Negativfederwegbereich zwischen 10% und 35% des Gesamtfederwegs führenden statischen Belastung ausgesetzt ist.

Gemäß einer elften Ausführungsform wird ein elektromotorisch betriebenes Fahrrad mit einer Antriebsvorrichtung nach einer der vorhergehenden Ausführungsformen vorgeschlagen, wobei die Antriebsvorrichtung unbeweglich an dem Hauptrahmen angeordnet ist.

Ein weiterer Aspekt der Erfindung betrifft einen Fahrradrahmen mit einem ein Schwingenlager aufweisenden Hauptrahmen, einem an dem Schwingenlager angeordneten Hinterbau, und einer Antriebsvorrichtung gemäß einer der vorhergehenden Ausführungsformen.

Ausführungsbeispiele der Erfindung sind in der Zeichnung dargestellt und werden nachstehend erläutert. Es zeigen:
- Fig. 1: eine Prinzipskizze eines vollgefederten Fahrrads mit einem als Mehrgelenker ausgeführten Hinterbau,
- Fig. 2: eine Seitenansicht eines elektromotorisch betriebenen Fahrrads mit einer erfindungsgemäßen Antriebsvorrichtung,
- Fig. 3: eine Seitenansicht einer erfindungsgemäßen Antriebsvorrichtung,
- Fig. 4: eine Seitenansicht eines elektromotorisch betriebenen Fahrrads mit einem als Eingelenker ausgeführten Hinterbau und einer hierin beschriebenen Antriebsvorrichtung,
- Fig. 5: eine Seitenansicht eines elektromotorisch betriebenen Fahrrads mit einem als Mehrgelenker ausgeführten Hinterbau und einer erfindungsgemäßen Antriebsvorrichtung,
- Fig. 6: einen vergrößerten Ausschnitt eines elektromotorisch betriebenen Fahrrads mit einer erfindungsgemäßen Antriebsvorrichtung in einer Seitenansicht,
- Fig. 7: eine Seitenansicht einer erfindungsgemäßen Antriebsvorrichtung,
- Fig. 8: eine Perspektivansicht von vorne auf ein elektromotorisch betriebenes Fahrrad mit einer erfindungsgemäßen Antriebsvorrichtung ohne Darstellung des Vorderrads und der Federgabel,
- Fig. 9: eine Seitenansicht eines elektromotorisch betriebenen Fahrrads mit einer erfindungsgemäßen Antriebsvorrichtung mit einem Kettenantrieb,
- Fig. 10: eine Seitenansicht eines elektromotorisch betriebenen Fahrrads mit einer erfindungsgemäßen Antriebsvorrichtung mit einem Zahnriemenantrieb,
- Fig. 11: eine Seitenansicht einer erfindungsgemäßen Antriebsvorrichtung,
- Fig. 12: eine Prinzipskizze einer erfindungsgemäßen Antriebsvorrichtung in einer Seitenansicht,
- Fig. 13: eine Seitenansicht eines konventionellen vollgefederten Fahrrads aus dem Stand der Technik,
- Fig. 14: eine weitere Seitenansicht eines konventionellen vollgefederten Fahrrads aus dem Stand der Technik, und
- Fig. 15: eine Prinzipskizze eines vollgefederten Fahrrads zur Erläuterung der Bestimmung des Momentanpols.

Unter elektromotorisch betriebenen Fahrrädern werden im Allgemeinen sogenannte E-Bikes verstanden. Zu diesen Arten von E-Bikes, die zur Auslegung der vorliegenden Offenbarung unter den Begriff eines elektromotorisch betriebenen Fahrrads fallen, gehören sowohl elektromotorisch angetriebene Fahrräder, die ausschließlich mit der Antriebskraft eines Elektromotors antreibbar sind, als auch elektromotorisch unterstützte Fahrräder, die unterstützend zur Tretkraft eine Antriebskraft eines Elektromotors zuschalten können.

Die Welle des ersten Antriebs, die Welle des Abtriebs und eine Ausgangs- bzw. Abtriebswelle des Elektromotors weisen eine Erstreckungsrichtung entlang ihrer Längsachse auf. Ein radialer Abstand bzw. eine radiale Beabstandung im Sinne der vorliegenden Offenbarung bezieht sich stets auf diese in Erstreckungsrichtung der jeweiligen Welle verlaufende Längsachse, d.h. radial bedeutet eine radiale Richtung ausgehend von der Längsachse. Die Erstreckungsrichtung der Längsachse ist in der Regel etwa orthogonal zu einer sich zwischen Hinterrad und Vorderrad erstreckenden vertikalen Mittelebene des Fahrrads.

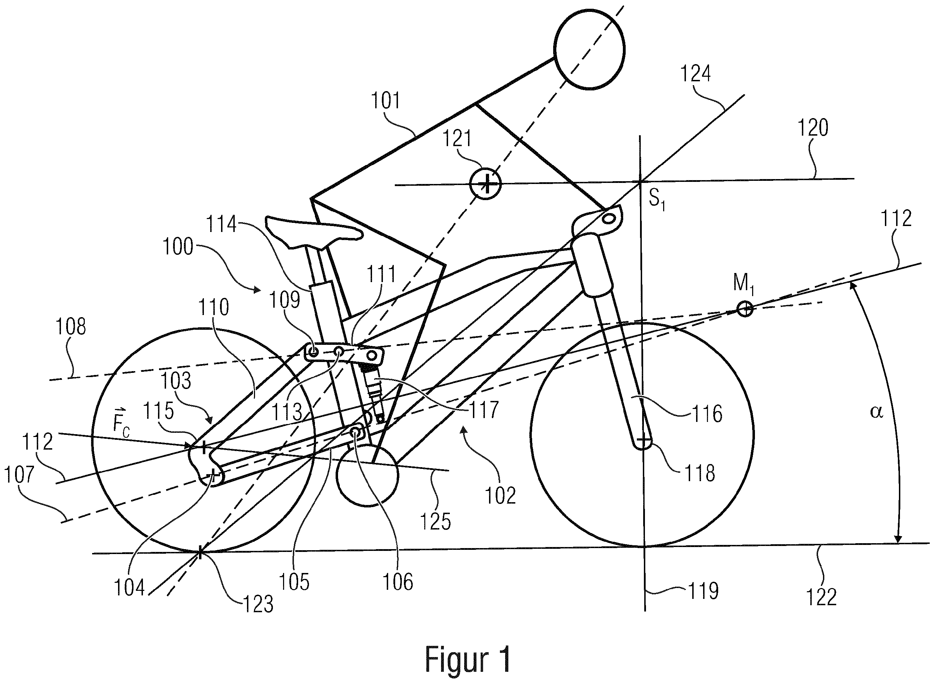

Die Erfindung basiert unter anderem auf der Erkenntnis, dass mittels einer Variation der Kinematik des Hinterbaus eine Anfahrmoment-Nickabstützung realisierbar ist. Der technische Hintergrund soll mit Bezug auf Figur 1 kurz erläutert werden.

Figur 1 zeigt ein vollgefedertes Mountainbike 100 mit einer darauf sitzenden Person 101. Das Mountainbike 100 weist einen Hauptrahmen 102 und einen schwingend an dem Hauptrahmen 102 angeordneten Hinterbau 103. Der Hinterbau 103 ist als ein Mehrgelenker mit einem zusätzlichen Drehpunkt 104 im Bereich der Kettenstrebe 105 konstruiert.

Für diese Mehrgelenker kann ein Momentanpol M₁ konstruiert werden, der als momentaner Drehpunkt zu einem Zeitpunkt t₁ angesehen werden. Der Momentanpol M₁ ist der Schnittpunkt einer ersten Geraden 107 und einer zweiten Geraden 108. Die erste Gerade 107 verläuft durch den zusätzlichen Drehpunkt 104 im Bereich der Kettenstrebe 105 und durch das Schwingenlager 106. Die zweite Gerade 108 verläuft durch den Anlenkpunkt 109 zwischen Sitzstrebe 110 und Wippe 111 und durch den Anlenkpunkt 113 zwischen Sitzrohr 114 und Wippe 111.

Durch den Momentanpol M₁ und die Hinterachse 115 kann eine weitere Gerade 112 gelegt werden. Diese Gerade 112 definiert den Schrägfederwinkel α des Fahrrads 100. Wie eingangs erwähnt, werden konventionelle Fahrräder derart konstruiert, dass diese einen Schrägfederwinkel von α=0° aufweisen. Die vorliegende Erfindung nutzt jedoch unter anderem die Erkenntnis, dass durch geeignete Wahl des Schrägfederwinkels α eine Anfahrmoment-Nickabstützung realisierbar ist.

Der Schrägfederwinkel α erzeugt einen Abstützeffekt welcher in bestimmten Fahrsituation mit hohem Drehmoment, z.B. beim Beschleunigen, Anfahren oder Bergauffahren, verhindert, dass die Hinterradfederung durch die dynamische Radlastverschiebung einfedert. Insbesondere bei E-Bikes ist aufgrund der größeren Antriebsleistung und des stärkeren Beschleunigungs-Vermögens eine effektive Anfahrmoment-Nickabstützung wünschenswert.

Bei einem elektrisch betriebenen Mountainbike ist beispielsweise ein Schrägfederwinkel von etwa 15° in einem Zustand einer statischen Einfederung sehr gut. Dieser Zustand der statischen Einfederung wird auch als SAG bezeichnet. Der SAG ergibt sich, wenn das Fahrrad einer zu einem Negativfederwegbereich zwischen 10% und 35% des Gesamtfederwegs führenden statischen Belastung ausgesetzt ist. Wenn also der Fahrer 101 auf dem Fahrrad 100 sitzt bzw. steht und sich nicht weiter bewegt, übt er rein durch sein Gewicht eine statische Belastung mit der Gewichtskraft G auf das Fahrrad 100 aus. Sowohl die vorne angeordnete Federgabel 116 als auch der hinten angeordnete Dämpfer 117 federn dabei ein.

Idealer Weise sollten sowohl die Gabel 116 als auch der Dämpfer 117 etwa 10% bis 35% ihres jeweiligen Gesamtfederwegs einfedern. Dieser Bereich wird auch als SAG oder Negativfederweg bezeichnet. Damit haben die Federelemente 116, 117 ausreichend Spielraum, um während des Fahrens sowohl ein- als auch auszufedern. Das in Figur 1 abgebildete Fahrrad 100 ist im SAG gezeigt, d.h. das Fahrrad ist also einer zu einem Negativfederwegbereich zwischen 10% und 35% des Gesamtfederwegs führenden statischen Belastung ausgesetzt.

Die Theorie hinter der fahrwerkskinematisch realisierbaren Anfahrmoment-Nickabstützung ist, dass von der Vorderradachse 118 ausgehend senkrecht ein Lot 119 auf die Horizontale 120 des Schwerpunktes 121 (Fahrrad 100 einschl. Fahrer 101 bilden Schwerpunkt 121 über Fahrbahn 122) erzeugt wird . Der Schnittpunkt zwischen diesen beiden Linien erzeugt einen Konstruktionspunkt S₁.

Zwischen diesem Schnittpunkt S₁ und dem hinteren Radaufstandspunkt 123 kann man eine schräg ansteigende Gerade 124 zeichnen. Diese Gerade 124 ist die sogenannte "Squat-Linie".

Verlaufen der Schrägfederwinkel α und die Squat-Linie 124 parallel zueinander, so spricht man von einem 100% Antisquat Fahrwerk. Das Fahrwerk reagiert in diesem Fall nicht auf Beschleunigungen, d.h. es federt weder ein noch aus. Verläuft der Schrägfederwinkel α unterhalb der Squat-Linie 124 federt der Hinterbau beim Beschleunigen, Anfahren, etc. ein. Verläuft der Schrägfederwinkel α oberhalb der Squat-Linie 124 federt der Hinterbau beim Beschleunigen, Anfahren, etc. aus.

Verlängert man beispielsweise den Radstand oder reduziert die Schwerpunkthöhe 121 über der Fahrbahn 122, ist demnach ein geringerer Schrägfederwinkel α notwendig, um die Anfahrmoment-Nickabstützung in gleichem Maße beizubehalten.

Wie eingangs mit Bezug auf Figur 13 bereits erläutert wurde, hängt die Richtung der auf die Hinterradachse ausgeübten Kraft F_{A} unter anderem von der Kettenzugrichtung F_{C} ab. Wenn man sich unter diesem Aspekt also das Fahrrad 100 in Figur 1 noch einmal näher ansieht, stellt man fest, dass die auf die Hinterradachse 115 ausgeübte Kraft F_{A} auf einer Kraftwirkungslinie 125 verläuft, die relativ weit unterhalb des Schwingenlagers 106 verläuft. Daraus resultiert ein übermäßig starkes Ausfedern des Hinterbaus beim Beschleunigen, Anfahren bzw. Bergauffahren etc.

E-Bikes stellen, im Vergleich zu mit Muskelkraft angetriebenen Fahrrädern, noch mehr Drehmoment zur Verfügung, d.h. die Kettenzugkraft F_{C} und somit auch die auf die Hinterradachse 115 ausgeübte Kraft F_{A} ist wesentlich größer. Das sorgt bei E-Bikes zu einem noch stärkeren Ausfedern des Hinterbaus. Aus dem oben gesagten folgt letztlich, dass ein Schrägfederwinkel von a>0° bei E-Bikes aufgrund ihres erhöhten Drehmoments zu einem ungewollten und viel zu starken Ausfedern des Hinterbaus führt.

Deshalb weisen konventionelle Fahrräder, auch E-Bikes, heutzutage einen Schrägfederwinkel im SAG von a=0° auf und die Anfahrmoment-Nickabstützung wird über den Kettenzug geregelt. Die vorliegende Erfindung hingegen realisiert eine Anfahrmoment-Nickabstützung sowohl mittels Kettenzug, als auch über die Fahrwerkskinematik.

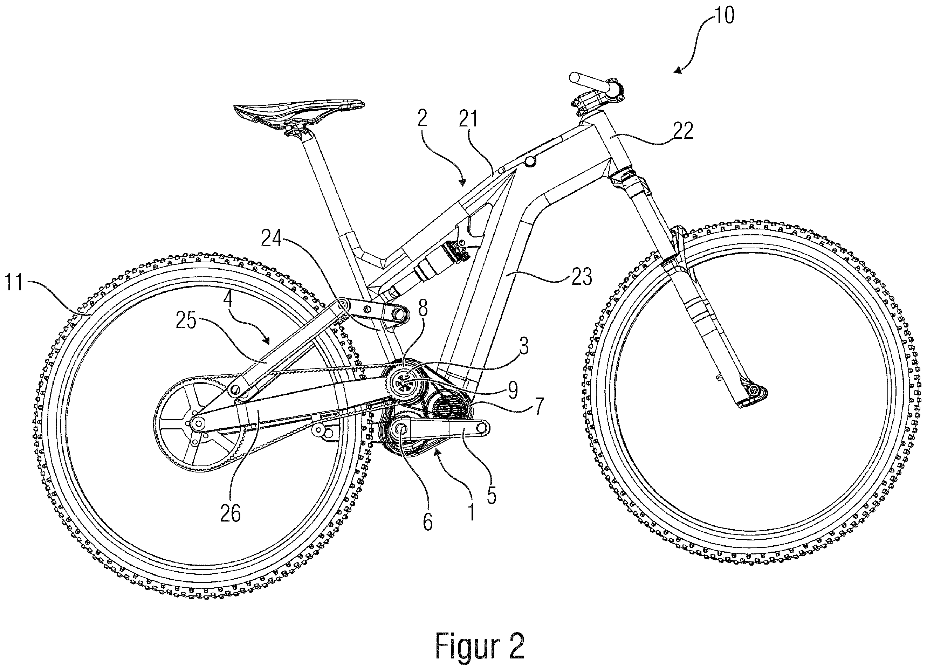

Figur 2 zeigt ein elektromotorisch betriebenes Fahrrad 10 mit einer erfindungsgemäßen Antriebsvorrichtung 1. Das elektromotorisch betriebene Fahrrad 10 kann auch als E-Bike bezeichnet werden. Dabei kann es sich um ein klassisches E-Bike handeln, bei dem die Motorleistung mittels Drehgriff oder dergleichen regelbar ist, und das E-Bike einzig durch den Elektromotor antreibbar ist. Es kann sich aber auch um ein sogenanntes Pedelec handeln, bei dem der Fahrer beim Treten durch Last-geregeltes Hinzuschalten des Elektromotors unterstützt wird.

Das elektromotorisch betriebene Fahrrad 10 weist einen Hauptrahmen 3 auf. Der Hauptrahmen 10 besteht in der Regel aus einem Oberrohr 21, einem Steuerrohr 22, einem Unterrohr 23 und einem Sitzrohr 24. Das elektromotorisch betriebene Fahrrad 10 ist ein vollgefedertes Fahrrad, ein sogenanntes Full-Suspension Bike, oder auch Fully genannt.

Der Hauptrahmen 2 weist außerdem ein Schwingenlager 3, und einen an dem Schwingenlager 3 angeordneten Hinterbau 4 auf. Der Hinterbau 4 ist an dem Schwingenlager 3 angeordnet und somit gelenkig mit dem Hauptrahmen 2 verbunden. Der Hinterbau 4 weist in der Regel eine Kettenstrebe 26 und eine Sitzstrebe 25 auf. Wie in Figur 2 zu erkennen ist, kann beispielsweise die Kettenstrebe 26 an dem Schwingenlager 3 angeordnet sein. Der Hinterbau kann als ein Eingelenker oder gemäß der vorliegenden Erfindung als ein Mehrgelenker ausgeführt sein.

Die Antriebsvorrichtung 1 weist eine Tretkurbel 5 auf. Die Tretkurbel 5 dient als ein erster Antrieb zum Bereitstellen einer ersten Antriebskraft. Die Tretkurbel 5, bzw. der erste Antrieb, weist eine erste Antriebswelle 6 auf. Die Antriebswelle 6 kann eine mit einem Kurbelarm verbundene Achse bzw. Welle der Tretkurbel 5 sein.

Die Antriebsvorrichtung 1 weist ferner einen Elektro-Mittelmotor 7 auf. Der Elektro-Mittelmotor 7 dient als ein zweiter Antrieb zum Bereitstellen einer zweiten Antriebskraft. Wie in Figur 2 zu erkennen ist, ist der Elektro-Mittelmotor 7 etwa in der Mitte, d.h. zwischen dem Vorderrad und dem Hinterrad des Fahrrads 10 angeordnet. Genauer gesagt ist der Mittelmotor 7 zwischen dem Unterrohr 23 und dem Sitzrohr 24 angeordnet. Diese Ausführungsform eines Mittelmotors 7 ist von anderen Antriebskonzepten, wie z.B. Radnabenmotoren, zu unterscheiden.

Darüber hinaus weist die Antriebsvorrichtung 1 einen Abtrieb 8 mit einer Abtriebswelle 9 auf. Der Abtrieb 8 ist ausgebildet, um die erste und/oder die zweite Antriebskraft aufzunehmen und an das anzutreibende Rad 11 des Fahrrads 10 abzugeben.

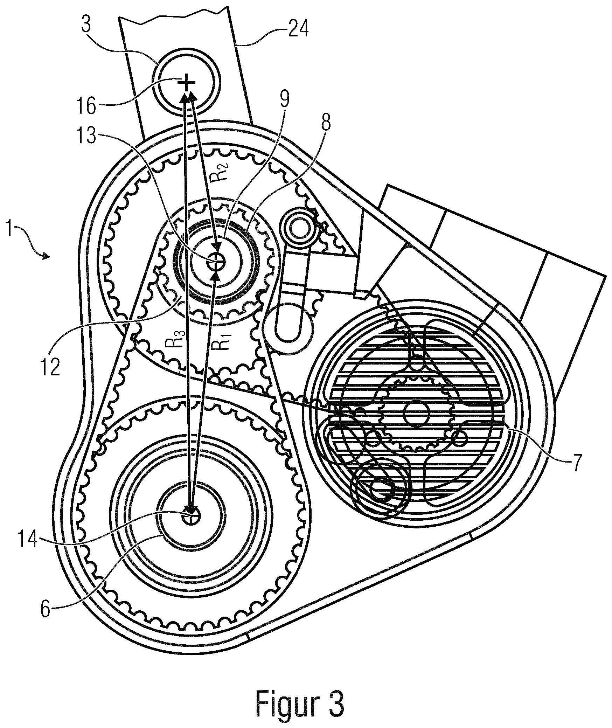

Figur 3 zeigt eine vergrößerte Darstellung der Antriebsvorrichtung 1. Zu erkennen ist die erste Antriebswelle 6 und der Elektromotor 7. Außerdem ist der Abtrieb 8 zu erkennen. Der Abtrieb 8 ist hier beispielhaft dargestellt als eine Abtriebswelle 9 mit einem daran angeordneten Zahnrad 12. Die Mittelachse 13 der Abtriebswelle 9 ist von der Mittelachse 14 der ersten Antriebswelle 6 radial beabstandet (R₁).

Figur 3 zeigt außerdem ein an dem Hauptrahmen 2 angeordnetes Schwingenlager 3. Das Schwingenlager 3 ist an dem abgebildeten Sitzrohr 24 angeordnet. Eine Schwinge bzw. der Hinterbau 4 ist an dem Schwingenlager 3 angeordnet und somit mit dem Hauptrahmen 2 verbunden. Der Hinterbau 4 ist der Übersichtlichkeit wegen in Figur 3 jedoch nicht dargestellt.

Erfindungsgemäß ist die Abtriebswelle 9 relativ zu dem Schwingenlager 3 derart angeordnet, dass ein radialer Abstand R₂ zwischen der Mittelachse 16 des Schwingenlagers 3 und der Mittelachse 13 der Abtriebswelle 9 kleiner ist als ein radialer Abstand R₃ zwischen der Mittelachse 16 des Schwingenlagers 3 und der Mittelachse 14 der ersten Antriebswelle 6.

Gemäß einer Ausführungsform beträgt die radiale Beabstandung R₁ zwischen der Mittelachse 14 der ersten Antriebswelle 6 und der Mittelachse 13 der Abtriebswelle 9 etwa 200 mm bis 300 mm, und vorzugsweise etwa 100 mm bis 200 mm.

Gemäß einer Ausführungsform beträgt die radiale Beabstandung R₂ zwischen der Mittelachse 16 des Schwingenlagers 3 und der Mittelachse 13 der Abtriebswelle 9 weniger als 200 mm, vorzugsweise weniger als 100 mm und weiter bevorzugt weniger als 50 mm.

Die Position des Schwingenlagers 3 ist in Figur 3 lediglich beispielhaft dargestellt. Das Schwingenlager 3 kann auch an anderen Stellen angeordnet sein, z.B. auch direkt an der Antriebsvorrichtung 1. In Figur 3 ist das Schwingenlager 3 oberhalb der Abtriebswelle 9 angeordnet. Es ist aber auch denkbar, dass das Schwingenlager 3 unterhalb der Abtriebswelle 9 angeordnet ist.

Erfindungsgemäß ist das Schwingenlager 3 jedenfalls in der Nähe der Abtriebswelle 9 angeordnet. Genauer gesagt ist das Schwingenlager 3 näher an der Abtriebswelle 9 als an der ersten Antriebswelle 6 angeordnet. Das heißt, erfindungsgemäß ist der radiale Abstand R2 zwischen der Abtriebswelle 9 und dem Schwingenlager 3 kleiner als der radiale Abstand R3 zwischen der Abtriebswelle 9 und der ersten Antriebswelle 6.

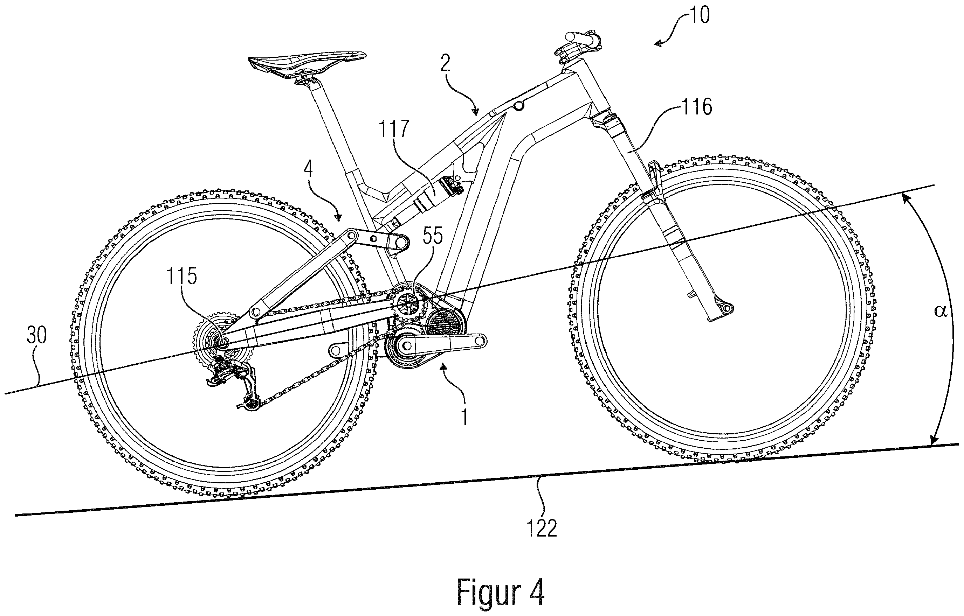

Figur 4 zeigt ein Fahrrad 10 mit einer hierin beschriebenen Antriebsvorrichtung 1, wobei das Schwingenlager 3 derart an dem Hauptrahmen 2 positioniert ist, dass das Fahrrad 10 einen Schrägfederwinkel α von 5° bis 30° aufweist, wenn das Fahrrad 10 einer zu einem Negativfederwegbereich zwischen 15% und 35% des Gesamtfederwegs führenden statischen Belastung ausgesetzt ist.

In anderen Worten befindet sich das Fahrrad 10 in dem in Figur 4 abgebildeten Zustand im SAG, d.h. die Federelemente 116, 117, und insbesondere der hinten angeordnete Dämpfer 117, sind um etwa 15% bis 35% ihres Gesamtfederwegs eingefedert.

Das abgebildete Fahrrad 10, bzw. der Hinterbau 4 des Fahrrads 10 ist als ein Eingelenker konstruiert. Demnach definiert die Gerade 30, die durch die Hinterachse 115 und durch das Schwingenlager 3 verläuft, relativ zu der Fahrbahnoberfläche 122 den Schrägfederwinkel a.

In Figur 4 ist zu erkennen, dass durch geeignete Positionierung des Schwingenlagers 3 an dem Hauptrahmen 2 der Schrägfederwinkel α beeinflussbar ist. Gemäß dem hierin beschriebenen Konzept ist das Schwingenlager 3 derart an dem Hauptrahmen 2 positioniert, dass das Fahrrad 10 einen Schrägfederwinkel α von 5° bis 30°, vorzugsweise von 10° bis 20°, und weiter bevorzugt von etwa 15° aufweist, wenn das Fahrrad 10 einer zu einem Negativfederwegbereich zwischen 10% und 35% des Gesamtfederwegs führenden statischen Belastung ausgesetzt ist.

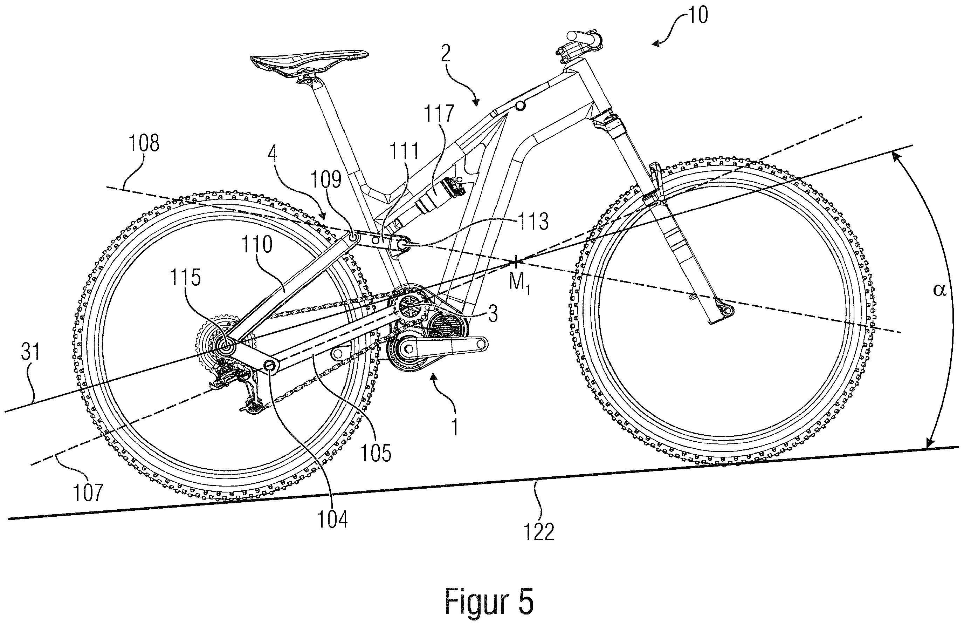

Figur 5 zeigt ein weiteres Ausführungsbeispiel eines Fahrrads 10 mit einer erfindungsgemäßen Antriebsvorrichtung 1. Im Gegensatz zu dem zuvor mit Bezug auf Figur 4 diskutierten Ausführungsbeispiel ist hier der Hinterbau 4 als ein Mehrgelenker ausgebildet, d.h. der Hinterbau 4 weist ein zusätzliches Gelenk 104 auf. Das zusätzliche Gelenk 104 ist hier im Bereich der Kettenstrebe 105 angeordnet. Es ist aber auch denkbar, dass das zusätzliche Gelenk 104 im Bereich der Sitzstrebe 110 angeordnet ist.

Das in Figur 5 abgebildete Fahrrad 10 befindet sich im SAG, d.h. es ist einer statischen Belastung ausgesetzt, die zu einem Negativfederwegbereich zwischen 10% und 35% des Gesamtfederwegs des Dämpfers 117 führt.

Bei dem in Figur 5 gezeigten Mehrgelenker kann für den abgebildeten Zustand ein Momentanpol M₁ konstruiert werden. Eine erste Gerade 107 schneidet das zusätzliche Gelenk 104 und das Schwingenlager 3. Eine zweite Gerade 108 verläuft durch das Gelenk 109 zwischen Sitzstrebe 110 und Wippe 111 sowie durch das Gelenk 113 zwischen Wippe 111 und Hauptrahmen 2 bzw. Sitzrohr 24. Der Schnittpunkt der beiden Geraden 107, 108 ergibt den Momentanpol M₁.

Eine Gerade 31 verläuft durch diesen Momentanpol M₁ und der Hinterachse 115. Diese Gerade 31 definiert relativ zu der Fahrbahnoberfläche 122 den Schrägfederwinkel α bei einem Mehrgelenker, wie er beispielhaft in Figur 5 abgebildet ist.

Es ist zu erwähnen, dass der konstruierte Momentanpol M₁ nur für den abgebildeten Zustand des Fahrrads 10 gültig ist. Sobald das Fahrrad 10 ein- oder ausfedert, verändert sich die Lage der Geraden 107, 108 relativ zueinander und der Momentanpol verschiebt sich an eine andere Position. Der Momentanpol ist sozusagen der zustandsabhängige momentane Drehpunkt des Hinterbaus 4, um den die Hinterachse 115 im betrachteten Zustand ausschwenkt.

Der in Figur 5 gezeigte Hinterbau 4 ist demnach als ein Mehrgelenker mit einem Momentanpol M₁ als momentaner Drehpunkt ausgebildet. Erfindungsgemäß ist der Hinterbau 4 derart an dem Hauptrahmen 2 positioniert, dass das Fahrrad 10 einen Schrägfederwinkel α von 5° bis 30°, vorzugsweise von 10° bis 20°, und weiter bevorzugt von etwa 15° aufweist, wenn das Fahrrad 10 einer zu einem Negativfederwegbereich zwischen 10% und 35% des Gesamtfederwegs führenden statischen Belastung ausgesetzt ist.

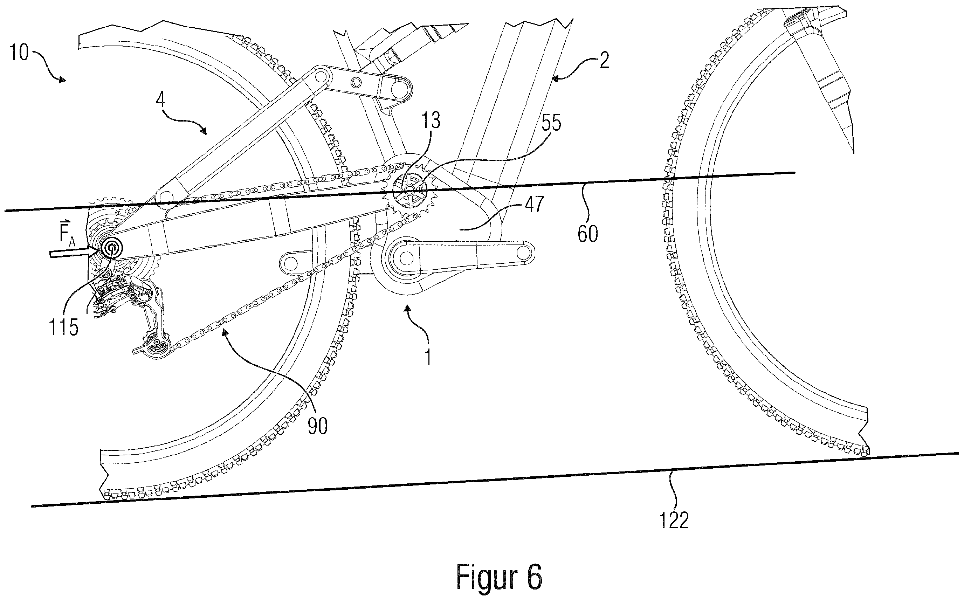

Figur 6 zeigt einen vergrößerten Ausschnitt eines Fahrrads 10 mit einer erfindungsgemäßen Antriebsvorrichtung 1. Es ist die Fahrbahnoberfläche 122 sowie eine dazu parallele Ebene 60 zu erkennen. Die zur Fahrbahnoberfläche parallele Ebene 60 verläuft durch die Mittelachse 13 des Abtriebs 8. Das Schwingenlager 3 kann derart an dem Hauptrahmen 2 angeordnet sein, dass die Mittelachse des Schwingenlagers 3 oberhalb dieser Ebene 60 angeordnet ist. In diesem Fall führt eine mittels Kettenzug auf die Hinterradachse 115 ausgeübte Kraft F_{A} zu einem Ausfedern des Hinterbaus 4.

In einer alternativen Ausführungsform kann das Schwingenlager 3 derart an dem Hauptrahmen 2 angeordnet sein, dass die Mittelachse des Schwingenlagers 3 unterhalb der Ebene 60 angeordnet ist. In diesem Fall führt eine mittels Kettenzug auf die Hinterradachse 115 wirkende Kraft F_{A} zu einem Einfedern des Hinterbaus 4.

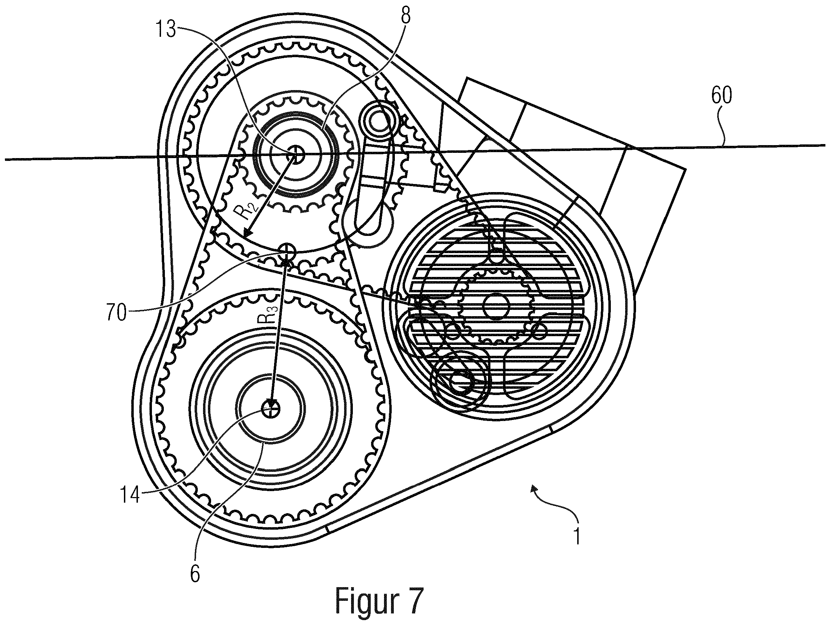

Figur 7 zeigt erneut die vergrößerte Darstellung der erfindungsgemäßen Antriebsvorrichtung 1, wie sie bereits in Figur 3 gezeigt wurde. Zu erkennen ist die Mittelachse 13 des Abtriebs 8. Außerdem ist hier die zuvor erwähnte zur Fahrbahnoberfläche 122 parallele Ebene 60 eingezeichnet.

Das Schwingenlager 3 kann also relativ zu der Mittelachse 13 des Abtriebs 8 derart angeordnet werden, dass die Mittelachse des Schwingenlagers 3 entweder oberhalb oder unterhalb der Ebene 60 angeordnet ist, je nachdem welches Verhalten (Einfedern oder Ausfedern) des Hinterbaus gewünscht ist.

Beispielhaft wurde ein Kreis mit Radius R₂ um die Mittelachse 13 des Abtriebs 8 eingezeichnet. Der Radius R₂ beschreibt beispielhaft einen Bereich, in dem die Mittelachse des Schwingenlagers 3 anordenbar ist. Das Schwingenlager 3 kann also beispielsweise derart um die Mittelachse 13 des Abtriebs 8 herum angeordnet werden, dass die Mittelachse des Schwingenlagers 3 radial, z.B. um den Wert R₂, von der Mittelachse 13 des Abtriebs 8 beabstandet ist.

Rein beispielhaft ist in Figur 7 ein derartiger potentieller Anbringungspunkt 70 eingezeichnet. Erfindungsgemäß kann das Schwingenlager 3 so um den Abtrieb 8 herum angeordnet werden, dass die Mittelachse des Schwingenlagers 3 einen beliebig großen radialen Abstand zu der Mittelachse 13 des Abtriebs 8 aufweist, jedoch unter Einhaltung der erfindungsgemäßen Vorgabe, dass der radiale Abstand R₂ zwischen der Mittelachse des Schwingenlagers 3 und der Mittelachse 13 der Abtriebswelle 9 kleiner ist als der radiale Abstand R₃ zwischen der Mittelachse des Schwingenlagers 3 und der Mittelachse 14 der ersten Antriebswelle 6.

Das Schwingenlager 3 sollte also in der Nähe des Abtriebs 8 angeordnet sein, und vorzugsweise näher an dem Abtrieb 8 als an der Antriebswelle 6 angeordnet sein.

In einer vorteilhaften Ausgestaltung der Erfindung ist der radiale Abstand R₂ zwischen der Mittelachse 13 der Abtriebswelle 9 und der Mittelachse des Schwingenlagers 3 gleich Null (R₂=0). Das heißt, die Mittelachse 13 der Abtriebswelle 9 und die Mittelachse des Schwingenlagers 3 sind konzentrisch bzw. koaxial.

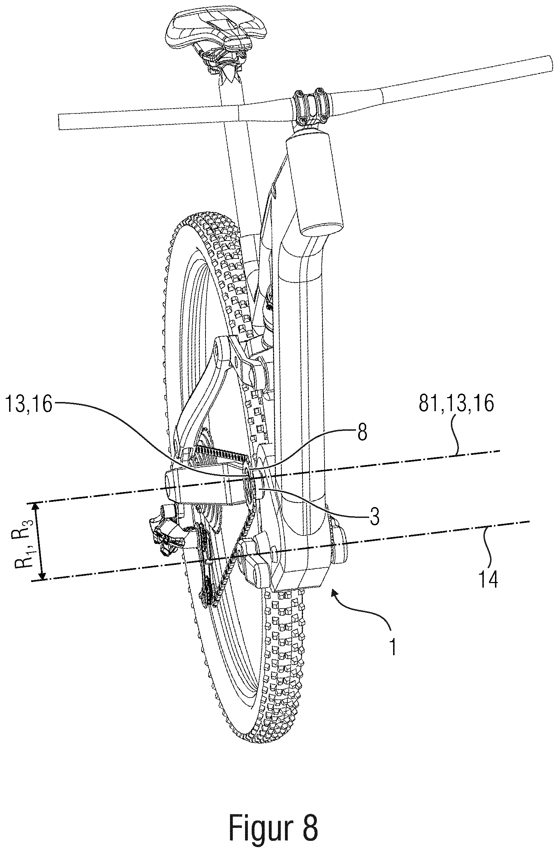

Dies ist in Figur 8 deutlich erkennbar gezeigt. Figur 8 zeigt eine frontale Perspektivansicht eines Fahrrads 10 mit einer erfindungsgemäßen Antriebsvorrichtung 1. Zur besseren Erkennbarkeit sind die Federgabel und das Vorderrad nicht dargestellt.

Hier ist zu erkennen, dass das Schwingenlager 3 und der Abtrieb 8 koaxial zueinander angeordnet sind. Die Mittelachse 13 des Abtriebs 8 und die Mittelachse 16 des Schwingenlagers 3 liegen also auf einer gemeinsamen Achse 81. Die Achse 81 ist also die gemeinsame Mittelachse des Abtriebs 8 und des Schwingenlagers 3.

Außerdem ist die Mittelachse 14 des ersten Antriebs, d.h. der Tretkurbel 5, gezeigt. Die Mittelachse 14 des ersten Antriebs 5 ist parallel zu der gemeinsamen Mittelachse 81 des Schwingenlagers 3 und des Abtriebs 8. Es ist außerdem zu erkennen, dass der Abtrieb 8 und das Schwingenlager 3 von dem ersten Antrieb 5 radial beabstandet angeordnet sind. Genauer gesagt ist der radiale Abstand R₁ zwischen der Mittelachse 14 des ersten Antriebs 5 und der Mittelachse 13 des Abtriebs 8 zu sehen. Da der Abtrieb 8 und das Schwingenlager 3 koaxial angeordnet sind, ist der radiale Abstand R₃ zwischen der Mittelachse des ersten Antriebs 5 und der Mittelachse 16 des Schwingenlagers 3 gleich groß wie der radiale Abstand R₁ zwischen der Mittelachse 14 des ersten Antriebs 5 und der Mittelachse 13 des Abtriebs 8 (R₁=R₃).

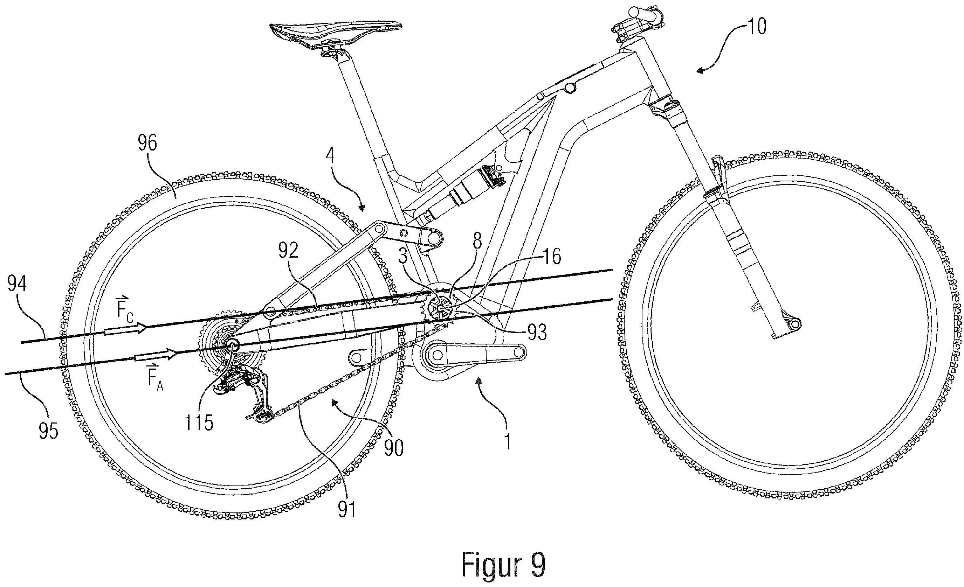

Figur 9 zeigt eine Seitenansicht eines Fahrrads 10 mit einer erfindungsgemäßen Antriebsvorrichtung 1. Das Fahrrad 10 ist erneut im SAG gezeichnet, das heißt in einem statischen Belastungszustand, in dem eine statische Kraft auf das Fahrrad 10 wirkt, die ein Einfedern des Dämpfers 117 um 10% bis 35% des Gesamtfederwegs des Dämpfers 117 bewirkt.

Wie bereits eingangs erwähnt, bestimmt sich die Richtung der auf die Hinterachse 115 ausgeübten Kraft F_{A} aus der Zugrichtung des Kraftübertragungsmittels zwischen Abtrieb 8 und Hinterrad 96.

In dem in Figur 9 gezeigten Ausführungsbeispiel ist eine konventionelle Fahrradkette 90 als Kraftübertragungsmittel abgebildet. Die Fahrradkette 90 weist ein Leertrum 91 und ein Lasttrum 92 auf. Der Abtrieb 8 weist ein Ritzel 93 auf, um den die Fahrradkette 90 geschlungen ist.

Bei Zugkraftausübung auf das Lasttrum 92 der Fahrradkette 90 stellt sich eine Kettenzugkraft F_{C} ein. Diese wirkt entlang der Kraftwirkungslinie 94. Die resultierende auf die Hinterradachse 115 wirkende Kraft F_{A} ist parallel zu der Kettenzugkraft F_{C} gerichtet. Die auf die Hinterradachse 115 wirkende Kraft F_{A} wirkt entlang der Kraftwirkungslinie 95.

Der Abtrieb 8 überträgt also mittels der Fahrradkette 90 eine Antriebskraft F_{C} an das anzutreibende Hinterrad 96 des Fahrrads 10. Dabei ist die Fahrradkette 90 derart zwischen dem Abtrieb 8 und dem Hinterrad 96 angeordnet, dass mittels Zugkraftausübung auf die Fahrradkette 90 eine Kraft F_{A} auf die Hinterachse 115 ausgeübt wird, deren Kraftwirkungslinie 95 unterhalb der Mittelachse 16 des Schwingenlagers 3 verläuft. Dies gilt insbesondere bei als Eingelenker konstruierten Hinterbauten 4. Daraus ergibt sich ein Ausfedern des Hinterbaus 4 beim Beschleunigen, Anfahren, Bergauffahren, etc.

Wenn es sich bei dem Hinterbau 4 um einen Mehrgelenker handelt, dann ist dieser erfindungsgemäß so ausgestaltet, dass die Kraftwirkungslinie 95 der auf die Hinterradachse 115 wirkenden Kraft F_{A} unterhalb des Momentanpols verläuft, wenn das Fahrrad einer zu einem Negativfederwegbereich zwischen 10% und 35% des Gesamtfederwegs führenden statischen Belastung ausgesetzt ist.

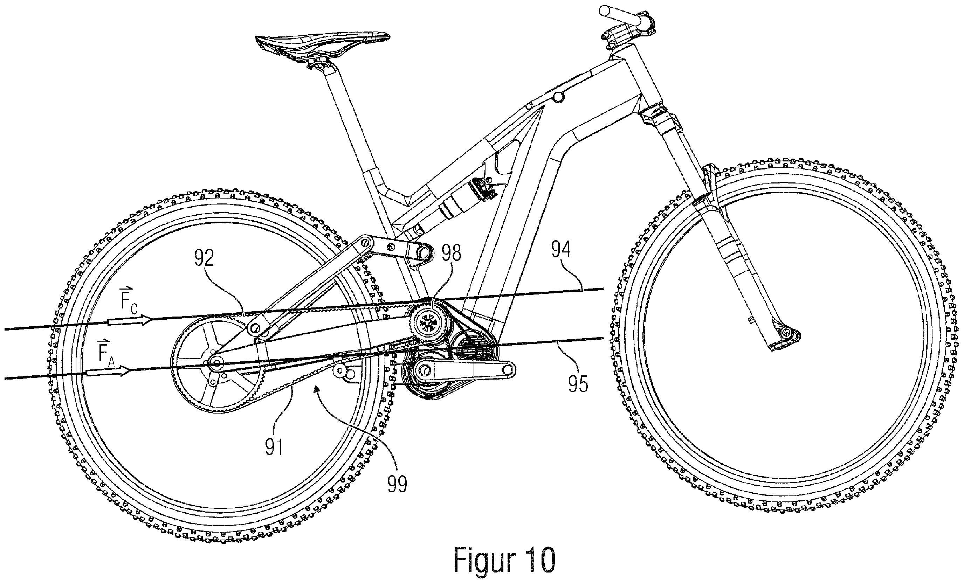

Figur 10 zeigt eine weitere Ausführungsform eines Fahrrads 10 mit einer erfindungsgemäßen Antriebsvorrichtung 1. Hier ist das Kraftübertragungsmittel als ein Zahnriemen 99 ausgebildet. Dementsprechend weist der Abtrieb 8 ein Zahnrad 98 auf, um das der Zahnriemen 99 geschlungen ist. Der Zahnriemen 99 weist ein Lasttrum 92 und ein Leertrum 91 auf.

Bei Zugkraftausübung auf das Lasttrum 92 des Zahnriemens 99 stellt sich eine Zugkraft F_{C} ein. Diese wirkt entlang der Kraftwirkungslinie 94. Die resultierende auf die Hinterradachse 115 wirkende Kraft F_{A} ist parallel zu der Zugkraft F_{C} gerichtet. Die auf die Hinterradachse 115 wirkende Kraft F_{A} wirkt entlang der Kraftwirkungslinie 95.

Der Abtrieb 8 überträgt also mittels des Zahnriemens 99 eine Antriebskraft F_{C} an das anzutreibende Hinterrad 96 des Fahrrads 10. Dabei ist der Zahnriemen 99 derart zwischen dem Abtrieb 8 und dem Hinterrad 96 angeordnet, dass mittels Zugkraftausübung auf den Zahnriemen 99 eine Kraft F_{A} auf die Hinterachse 115 ausgeübt wird, deren Kraftwirkungslinie 95 unterhalb der Mittelachse 16 des Schwingenlagers 3 verläuft. Dies gilt insbesondere bei als Eingelenker konstruierten Hinterbauten 4. Daraus ergibt sich ein Ausfedern des Hinterbaus 4 beim Beschleunigen, Anfahren, Bergauffahren, etc.

Wenn es sich bei dem Hinterbau 4 um einen Mehrgelenker handelt, dann ist dieser erfindungsgemäß so ausgestaltet, dass die Kraftwirkungslinie 95 der auf die Hinterradachse 115 wirkenden Kraft F_{A} unterhalb des Momentanpols verläuft, wenn das Fahrrad einer zu einem Negativfederwegbereich zwischen 10% und 35% des Gesamtfederwegs führenden statischen Belastung ausgesetzt ist.

Die Erfindung stellt also eine Anfahrmoment-Nickabstützung bereit, die sowohl mittels der Kinematik des Hinterbaus 4 als auch mittels Zugkraftausübung auf das jeweilige Kraftübertragungsmittel 90, 99 realisierbar ist.

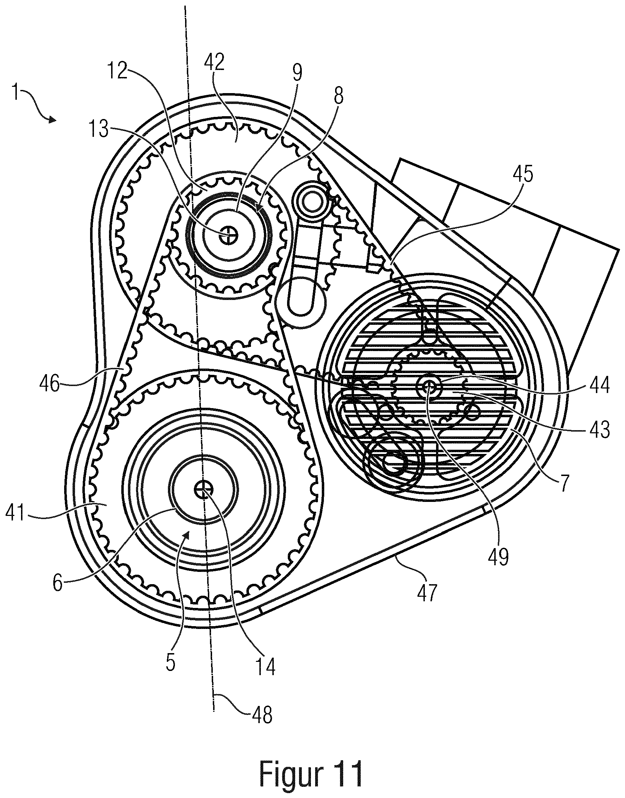

Figur 11 zeigt noch einmal eine vergrößerte Seitenansicht einer erfindungsgemäßen Antriebsvorrichtung 1. Die Antriebsvorrichtung 1 weist mehrere Bestandteile auf, unter anderem Antriebe und Abtriebe mit unterschiedlichen Untersetzungen bzw. Übersetzungen.

Der erste Antrieb 5 weist eine erste Antriebswelle 6 auf. Die Antriebswelle 6 kann bevorzugt die Tretlagerwelle der Tretkurbel sein. An der ersten Antriebswelle 6 ist ein Zahnrad 41 angeordnet.

Der Abtrieb 8 weist eine Abtriebswelle 9 auf. An der Abtriebswelle 9 ist ein Zahnrad 12 angeordnet. Das an der Abtriebswelle 9 angeordnete Zahnrad 12 ist mit dem an der Antriebswelle 6 des ersten Antriebs 5 angeordneten Zahnrad 41 mittels eines Zahnriemens 46 gekoppelt.

Das an der Abtriebswelle 9 angeordnete Zahnrad 12 weist weniger Zähne bzw. einen kleineren Durchmesser auf als das an der Antriebswelle 6 des ersten Antriebs 5 angeordnete Zahnrad 41. Somit ergibt sich vom ersten Antrieb 5 zum Abtrieb 8 eine Übersetzung ins Schnelle, wobei die Übersetzung ein Verhältnis von 3:1 oder vorzugsweise von 2:1 aufweist.

An der Abtriebswelle 9 ist ein weiteres Zahnrad 42 angeordnet. Das zweite Zahnrad 42 ist mittels eines Zahnriemens 45 mit einem an einer Abtriebswelle 44 des Elektromotors 7 angeordneten Zahnrad 43 gekoppelt.

Das an der Abtriebswelle 9 angeordnete Zahnrad 42 weist mehr Zähne bzw. einen größeren Durchmesser auf als das an der Abtriebswelle 43 des Elektromotors 7 angeordnete Zahnrad 43. Somit ergibt sich vom Antrieb (Elektromotor 7) zum Abtrieb 8 eine Untersetzung ins Langsame, wobei die Untersetzung ein Verhältnis von 1:2 oder vorzugsweise von 1:3 aufweist.

Die abgebildeten Zahnriemen 45, 46 können auch durch Antriebsketten ersetzt werden. In diesem Fall wären die Zahnräder 12, 41, 42, 43 vorzugsweise als Ritzel ausgebildet. Die abgebildeten Zahnriemen 45, 46 können aber auch durch Keilriemen ersetzt werden. In diesem Fall wären die Zahnräder 12, 41, 42, 43 vorzugsweise als profilierte Rollen ausgebildet. Ebenfalls denkbar wäre eine Direktverzahnung von zumindest einer Zahnradpaarung zwischen Elektromotor 7 und Abtrieb 8 und/oder zwischen erstem Antrieb 5 und Abtrieb 8.

Die Antriebsvorrichtung 1 kann ein Gehäuse 47 aufweisen, in dem der erste Antrieb 5, der Elektromotor 7 und der Abtrieb 8 angeordnet sind. Der Elektromotor 7 kann an dem Gehäuse 47 montiert sein, wobei an dem Montageort Kühlrippen in dem Gehäuse 47 vorgesehen sein können, um den Motor 7 zu kühlen. Der Elektromotor 7 kann als ein Außenläufermotor, und vorzugsweise als ein Torquemotor ausgebildet sein.

In Figur 11 ist außerdem eine Gerade 48 zu erkennen, die durch die Mittelachse 14 des ersten Antriebs 5 verläuft. Diese Gerade 48 verläuft lotrecht zur (hier nicht dargestellten) Fahrbahnoberfläche 122. Die Mittelachse 13 des Abtriebs 8 sowie die Mittelachse 49 der Abtriebswelle 44 des Elektromotors 7 sind in Vorwärts-Fahrtrichtung vor der Lotrechten 48 und somit vor der Mittelachse 14 des ersten Antriebs 5 angeordnet.

Es ist aber auch denkbar, dass der Abtrieb 8 derart angeordnet ist, dass dessen Mittelachse 13 in Vorwärts-Fahrtrichtung hinter der Lotrechten 48 und somit hinter der Mittelachse 14 des ersten Antriebs 5 angeordnet ist. So kann die Kettenstrebe des Hinterbaus kurz gehalten werden, für den Fall, dass die Mittelachse 13 des Abtriebs 8 koaxial zu dem Schwingenlager 3 angeordnet ist.

Gemäß einer (hier nicht näher dargestellten) Ausführungsform kann der Elektromotor 7 relativ zu dem Abtrieb 8 derart angeordnet sein, dass die Mittelachse 13 des Abtriebs 8 koaxial zu der Mittelachse 49 der Abtriebswelle 44 des Elektromotors 7 ist. Somit wäre der Abtrieb 8 direkt mit der Ausgangswelle 44 des Elektromotors 7 gekoppelt. In anderen Worten teilen sich der Elektromotor 7 und der Abtrieb 8 eine gemeinsame Welle. Der in Figur 11 abgebildete verbindende Zahnriemen 45 sowie das an der Ausgangswelle 44 angeordnete Zahnrad 43 und das abtriebsseitige Zahnrad 42 könnten in diesem Fall also weggelassen werden.

Wie zuvor erwähnt, weist die vorliegend beschriebene Anordnung der einzelnen Komponenten innerhalb der Antriebsvorrichtung 1 eine Untersetzung bzw. eine Übersetzung auf. Um in dem soeben beschriebenen Fall, gemäß dem die Mittelachse 13 des Abtriebs 8 koaxial zu der Mittelachse 49 der Motorausgangswelle 44 angeordnet ist, könnte der Elektromotor 7 ein internes Getriebe aufweisen, um die gewünschte Untersetzung bzw. Übersetzung zu realisieren, d.h. um eine gewünschte Drehzahl bzw. ein gewünschtes Drehmoment direkt an der Ausgangswelle 40 abzugeben.

Die erfindungsgemäße Antriebsvorrichtung 1 wiese in diesem Fall also zwei Wellen auf, nämlich die Welle 6 des ersten Antriebs 5 und die von Elektromotor 7 und Abtrieb 8 gemeinsam genutzte Ausgangswelle 44, deren Mittelachse 49 koaxial zu der Mittelachse 13 des Abtriebs 8 angeordnet ist. In einem solchen Zwei-Wellen-Betrieb wäre es denkbar, dass der erste Antrieb 5 mit einer Untersetzung von 1:3 oder vorzugsweise von 1:2 mit der gemeinsamen Ausgangswelle 44 gekoppelt ist.

Der Elektromotor 7 weist ein internes Getriebe mit einer Übersetzung von 2:1 oder vorzugsweise 3:1 auf. Über die Ausgangswelle 44 gibt der Elektromotor 7 das gewünschte Drehmoment bzw. die gewünschte Drehzahl an ein an der Ausgangswelle 44 angeordnetes Kettenblatt, Ritzel, Zahnrad 55 (Figur 6) oder dergleichen ab. Das Zahnrad 55 ist von dem zum Antrieb genutzten Kraftübertragungsmittel, wie z.B. einer Kette 90 oder einem Zahnriemen oder dergleichen, gekoppelt. Das Ritzel 55 kann außerhalb des Gehäuses 47 der Antriebsvorrichtung 1 angeordnet sein (Figur 6). Das Ritzel 55 kann aber auch innerhalb des Gehäuses 47 angeordnet sein. Entsprechende Aussparungen in dem Gehäuse 47 zum Durchführen des Kraftübertragungsmittels 90 wären hierbei obligatorisch.

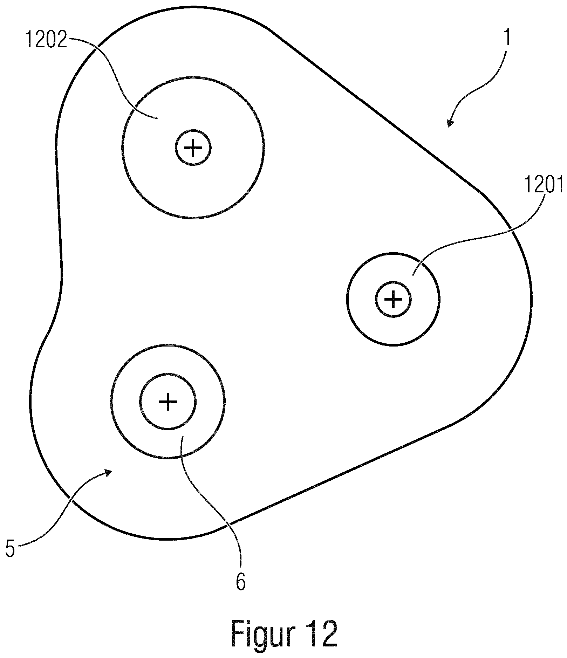

Neben dem soeben erwähnten Zwei-Wellen-Betrieb ist mit der erfindungsgemäßen Antriebsvorrichtung 1 auch ein Drei-Wellen-Betrieb möglich. Dies ist schematisch in Figur 12 abgebildet.

Figur 12 zeigt die Antriebswelle 6 des ersten Antriebs 5, an der die Tretkurbel angeordnet ist. Die schematisch dargestellte Antriebsvorrichtung 1 weist ferner eine erste zusätzliche Welle 1201 und eine zweite zusätzliche Welle 1202. Die Wellen 6, 1201, 1202 können untereinander in den folgenden, in den Tabellen 1 bis 3 aufgeführten, drei Konfigurationen miteinander verbunden sein.

**Tabelle 1**

| KONFIGURATION 1 | | | | | | |
|---|---|---|---|---|---|---|
| erster Antrieb 5 (Tretkurbel) | → | erste zusätzliche Welle 1201 | → | zweite zusätzliche Welle 1202 | → | Hinterradachse 115 |
| | | Motor | | Vorgelege | | Getriebe (z.B. Nabe, Kettenschaltung) |

**Tabelle 2**

| **KONFIGURATION 2** | | | | | | |
|---|---|---|---|---|---|---|
| erster Antrieb 5 (Tretkurbel) | → | erste zusätzliche Welle 1201 | → | zweite zusätzliche Welle 1202 | → | Hinterradachse 115 |
| | | Getriebe | | Motor | | Nachgelege |

**Tabelle 3**

| **KONFIGURATION 3** | | | | | | |
|---|---|---|---|---|---|---|
| erster Antrieb 5 (Tretkurbel) | → | erste zusätzliche Welle 1201 | → | zweite zusätzliche Welle 1202 | → | Hinterradachse 115 |
| | | Motor | | Getriebe | | Nachgelege |

Um eine sichere Funktionsweise der Antriebsvorrichtung 1 zu gewährleisten, sollten mindestens zwei Freiläufe vorgesehen werden. Die Freiläufe können generell an jeder Welle, d.h. sowohl an der ersten Antriebswelle 6, an der Abtriebswelle 9, an der Motorausgangswelle 44 und an der Hinterachswelle 115 vorgesehen werden. Eine vorteilhafte Ausführung sieht vor, dass ein Freilauf an der Hinterachswelle 115 und ein Freilauf an der Tretkurbelwelle (erste Antriebswelle) 6 vorgesehen sind.

## Patentansprüche

1. Hinterbau eines elektromotorisch betriebenen Fahrrads mit einer Antriebsvorrichtung (1) für ein elektromotorisch betriebenes Fahrrad (10) mit einem ein Schwingenlager (3) aufweisenden Hauptrahmen (2) und einem an dem Schwingenlager (3) angeordneten Hinterbau (4), wobei die Antriebsvorrichtung (1) aufweist:
eine Tretkurbel (5) als ein erster Antrieb zum Bereitstellen einer ersten Antriebskraft, wobei der erste Antrieb (5) eine erste Antriebswelle (6) aufweist,
einen Elektro-Mittelmotor (7) als ein zweiter Antrieb zum Bereitstellen einer zweiten Antriebskraft, und
einen Abtrieb (8) mit einer Abtriebswelle (9), wobei der Abtrieb (8) ausgebildet ist, um die erste und/oder die zweite Antriebskraft aufzunehmen und an das anzutreibende Rad (11) des Fahrrads (10) abzugeben,
wobei die Mittelachse (13) der Abtriebswelle (9) von der Mittelachse (14) der ersten Antriebswelle (6) radial beabstandet (R₁) ist und die Abtriebswelle (9) relativ zu dem Schwingenlager (3) derart angeordnet ist, dass ein radialer Abstand (R₂) zwischen der Mittelachse (16) des Schwingenlagers (3) und der Mittelachse (13) der Abtriebswelle (9) kleiner ist als ein radialer Abstand (R₃) zwischen der Mittelachse (16) des Schwingenlagers (3) und der Mittelachse (14) der ersten Antriebswelle (6),
**dadurch gekennzeichnet, dass** der Hinterbau (4) als ein Mehrgelenker mit einem Momentanpol (M₁) als momentaner Drehpunkt ausgebildet ist, und der Hinterbau (4) derart an dem Hauptrahmen (2) positioniert ist, dass das Fahrrad (10) einen Schrägfederwinkel (α) von 5° bis 30°, vorzugsweise von 10° bis 20° und weiter bevorzugt von etwa 15° aufweist, wenn das Fahrrad (10) einer zu einem Negativfederwegbereich zwischen 10% und 35% des Gesamtfederwegs führenden statischen Belastung ausgesetzt ist.

2. Hinterbau eines elektromotorisch betriebenen Fahrrads mit einer Antriebsvorrichtung (1) nach Anspruch 1, wobei das Schwingenlager (3) derart an dem Hauptrahmen (2) positioniert ist, dass das Fahrrad (10) einen Schrägfederwinkel (α) von 5° bis 30°, vorzugsweise von 10° bis 20° und weiter bevorzugt von etwa 15° aufweist, wenn das Fahrrad (10) einer zu einem Negativfederwegbereich zwischen 10% und 35% des Gesamtfederwegs führenden statischen Belastung ausgesetzt ist.

3. Hinterbau eines elektromotorisch betriebenen Fahrrads mit einer Antriebsvorrichtung (1) nach einem der vorhergehenden Ansprüche, wobei die radiale Beabstandung (R₁) zwischen der Mittelachse (14) der ersten Antriebswelle (6) und der Mittelachse (13) der Abtriebswelle (9) 200 mm bis 300 mm, und vorzugsweise 100 mm bis 200 mm beträgt.

4. Hinterbau eines elektromotorisch betriebenen Fahrrads mit einer Antriebsvorrichtung (1) nach einem der vorhergehenden Ansprüche, wobei die radiale Beabstandung (R₂) zwischen der Mittelachse (16) des Schwingenlagers (3) und der Mittelachse (13) der Abtriebswelle (9) weniger als 200 mm, vorzugsweise weniger als 100 mm, und weiter bevorzugt weniger als 50 mm beträgt.

5. Hinterbau eines elektromotorisch betriebenen Fahrrads mit einer Antriebsvorrichtung (1) nach einem der vorhergehenden Ansprüche, wobei die Mittel achse (16) des Schwingenlagers (3) bezüglich einer zur Fahrbahnoberfläche (122) parallelen Ebene (60) oberhalb der Mittelachse (13) des Abtriebs (8) angeordnet ist.

6. Hinterbau eines elektromotorisch betriebenen Fahrrads mit einer Antriebsvorrichtung (1) nach einem der Ansprüche 1 bis 4, wobei die Mittelachse (16) des Schwingenlagers (3) bezüglich einer zur Fahrbahnebene (122) parallelen Ebene (60) unterhalb der Mittelachse (13) des Abtriebs (8) angeordnet ist.

7. Hinterbau eines elektromotorisch betriebenen Fahrrads mit einer Antriebsvorrichtung (1) nach einem der Ansprüche 1 bis 4, wobei der radiale Abstand (R₂) zwischen der Mittelachse (13) der Abtriebswelle (9) und der Mittelachse (16) des Schwingenlagers (3) gleich Null ist, sodass die Mittelachse (13) der Abtriebswelle (9) und die Mittelachse (16) des Schwingenlagers (3) konzentrisch angeordnet sind.

8. Hinterbau eines elektromotorisch betriebenen Fahrrads mit einer Antriebsvorrichtung (1) nach einem der vorhergehenden Ansprüche, wobei der Ab trieb (8) und der Elektro-Mittelmotor (7) derart zueinander angeordnet sind, dass die Mittelachse (13) des Abtriebs (8) und die Mittelachse (49) einer Abtriebswelle (44) des Elektro-Mittelmotors (7) konzentrisch angeordnet sind.

9. Hinterbau eines elektromotorisch betriebenen Fahrrads mit einer Antriebsvorrichtung (1) nach einem der vorhergehenden Ansprüche, wobei der Abtrieb (8) mittels eines Kraftübertragungsmittels (90, 99), insbesondere mittels einer Kette (90) oder eines Zahnriemens (99) oder eines Keilriemens, die Antriebskraft (F_{C}) an das anzutreibende Rad (96) des Fahrrads (10) überträgt, und das Kraftübertragungsmittel (90, 99) derart zwischen dem Abtrieb (8) und dem Rad (96) angeordnet ist, dass mittels Zugkraftausübung auf ein Lasttrum (92) des Kraftübertragungsmittels (90, 99) eine Kraft (F_{A}) auf die Hinterachse (115) ausgeübt wird, deren Kraftwirkungslinie (95) unterhalb der Mittelachse (16) des Schwingenlagers (2) oder unterhalb des Momentanpols verläuft, wenn das Fahrrad (10) einer zu einem Negativfederwegbereich zwischen 10% und 35% des Gesamtfederwegs führenden statischen Belastung ausgesetzt ist.

10. Hinterbau eines elektromotorisch betriebenen Fahrrads mit einer Antriebsvorrichtung (1) nach einem der vorhergehenden Ansprüche, wobei die Antriebsvorrichtung (1) unbeweglich an dem Hauptrahmen (2) angeordnet ist.

11. Verwendung eines Hinterbaus eines elektromotorisch betriebenen Fahrrads mit einer Antriebsvorrichtung (1) gemäß einem der Ansprüche 1 bis 10 in einem elektromotorisch betriebenen Fahrrad (10).

12. Elektromotorisch betriebenes Fahrrad (10) mit einem Hinterbau eines elektromotorisch betriebenen Fahrrads mit einer Antriebsvorrichtung (1) gemäß einem der Ansprüche 1 bis 10.

13. Fahrradrahmen mit einem ein Schwingenlager (3) aufweisenden Hauptrahmen (2), einem an dem Schwingenlager (3) angeordneten Hinterbau (4), und dem Hinterbau eines elektromotorisch betriebenen Fahrrads mit einer Antriebsvorrichtung (1) gemäß einem der Ansprüche 1 bis 10.

## Claims

1. A rear linkage element of a bicycle driven by an electric motor, comprising a drive device (1) for a bicycle (10) driven by an electric motor, comprising a main frame (2) having a swing arm bearing (3), and a rear linkage element (4) arranged at the swing arm bearing (3), the drive device (1) comprising:
a pedal crank (5) as a first drive for providing a first drive force, the first drive (5) comprising a first drive shaft (6),
a center electric motor (7) as a second drive for providing a second drive force, and
an output element (8) comprising an output shaft (9), the output element (8) being configured to receive the first and/or second drive forces and transfer the same to the wheel (11) of the bicycle (10) to be driven,
wherein the center axis (13) of the output shaft (9) is radially distanced (R₁) from the center axis (14) of the first drive shaft (6) and the output shaft (9) is arranged relative to the swing arm bearing (3) such that a radial distance (R₂) between the center axis of the swing arm bearing (3) and the center axis (13) of the output shaft (9) is smaller than a radial distance (R₃) between the center axis (16) of the swing arm bearing (3) and the center axis (14) of the first drive shaft (6),
**characterized in that** the rear linkage element (4) is implemented as a multi pivot comprising an instant center (M₁) as an instantaneous center of rotation, and the rear linkage element (4) is positioned at the main frame (2) such that the bicycle (10) comprises a suspension oblique angle α of 5° to 30°, preferably 10° to 20° and even more preferably of about 15° if the bicycle (10) is subjected to a static load resulting in a negative spring deflection between 10% and 35% of the total spring deflection.

2. The rear linkage element of a bicycle driven by an electric motor, comprising a drive device (1) in accordance with claim 1, wherein the swing arm bearing (3) is positioned at the main frame (2) such that the bicycle (10) comprises a suspension oblique angle α of 5° to 30°, preferably 10° to 20° and even more preferably of about 15° if the bicycle (10) is subjected to a static load resulting in a negative spring deflection between 10% and 35% of the total spring deflection.

3. The rear linkage element of a bicycle driven by an electric motor, comprising a drive device (1) in accordance with any of the preceding claims, wherein the radial distance (R₁) between the center axis (14) of the first drive shaft (6) and the center axis (13) of the output shaft (9) is 200mm to 300mm and preferably 100mm to 200mm.

4. The rear linkage element of a bicycle driven by an electric motor, comprising a drive device (1) in accordance with any of the preceding claims, wherein the radial distance (R₂) between the center axis (16) of the swing arm bearing (3) and the center axis (13) of the output shaft (9) is less than 200mm, preferably less than 100mm and even more preferably less than 50mm.

5. The rear linkage element of a bicycle driven by an electric motor, comprising a drive device (1) in accordance with any of the preceding claims, wherein the center axis (16) of the swing arm bearing (3), relative to a plane (60) parallel to the road surface (122), is arranged above the center axis (13) of the output element (8).

6. The rear linkage element of a bicycle driven by an electric motor, comprising a drive device (1) in accordance with any of claims 1 to 4, wherein the center axis (16) of the swing arm bearing (3), relative to a plane (60) parallel to the road surface (122), is arranged below the center axis (13) of the output element (8).

7. The rear linkage element of a bicycle driven by an electric motor, comprising a drive device (1) in accordance with any of claims 1 to 4, wherein the radial distance (R₂) between the center axis (13) of the output shaft (9) and the center axis (16) of the swing arm bearing (3) equals zero so that the center axis (13) of the output shaft (9) and the center axis (16) of the swing arm bearing (3) are arranged concentrically.

8. The rear linkage element of a bicycle driven by an electric motor, comprising a drive device (1) in accordance with any of the preceding claims, wherein the output element (8) and the center electric motor (7) are arranged relative to each other such that the center axis (13) of the output element (8) and the center axis (49) of an output shaft (44) of the center electric motor (7) are arranged concentrically.

9. The rear linkage element of a bicycle driven by an electric motor, comprising a drive device (1) in accordance with any of the preceding claims, wherein the output element (8) transfers the drive force (Fc) to the wheel (96) of the bicycle (10) to be driven by means of force transmission means (90, 99), in particular by means of a chain (90) or cog belt (99) or V-belt, and the force transmission means (90, 99) is arranged between the output element (8) and the wheel (96) such that a force (F_{A}) is applied to the rear axis (115) by means of applying a pull force to a tight side (92) of the force transmission means (90, 99), wherein the force action line (95) of the force (F_{A}) is located below the center axis (16) of the swing arm bearing (2) or below the instant center if the bicycle (10) is subjected to a static load resulting in a negative spring deflection between 10% and 35% of the total spring deflection.

10. The rear linkage element of a bicycle driven by an electric motor, comprising a drive device (1) in accordance with any of the preceding claims, the drive device (1) being arranged at the main frame (2) to be immobile.

11. A usage of a rear linkage element of a bicycle driven by an electric motor, comprising drive device (1) in accordance with any of claims 1 to 10 in a bicycle (10) driven by an electric motor.

12. A bicycle (10) driven by an electric motor and comprising a rear linkage element of a bicycle driven by an electric motor, comprising a drive device (1) in accordance with any of claims 1 to 10.

13. A bicycle frame comprising a main frame (2) having a swing arm bearing (3), a rear linkage element (4) arranged at the swing arm bearing (3), and the rear linkage element of a bicycle driven by an electric motor, comprising a drive device (1) in accordance with any of claims 1 to 10.

## Revendications

1. Construction arrière d'une bicyclette actionnée par moteur électrique avec un dispositif d'entraînement (1) pour une bicyclette actionnée par moteur électrique (10) avec un cadre principal (2) présentant un palier de bras oscillant (3) et une construction arrière (4) disposée sur le palier de bras oscillant (3), dans laquelle le dispositif d'entraînement (1) présente:
une manivelle de pédalier (5) comme premier entraînement destinée à fournir une première force d'entraînement, où le premier entraînement (5) présente un premier arbre d'entraînement (6),
un moteur électrique central (7) comme deuxième entraînement destiné à fournir une deuxième force d'entraînement, et
une prise de force (8) avec un arbre de sortie (9), où la prise de force (8) est conçue pour recevoir la première et/ou la deuxième force d'entraînement et pour la délivrer à la roue à entraîner (11) de la bicyclette (10),
dans laquelle l'axe central (13) de l'arbre de sortie (9) est radialement distant (Ri) de l'axe central (14) du premier arbre d'entraînement (6) et l'arbre de sortie (9) est disposé par rapport au palier de bras oscillant (3) de sorte qu'une distance radiale (R₂) entre l'axe central (16) du palier de bras oscillant (3) et l'axe central (13) de l'arbre de sortie (9) soit inférieure à une distance radiale (R₃) entre l'axe central (16) du bras oscillant portant (3) et l'axe central (14) du premier arbre d'entraînement (6),
**caractérisée par le fait que** la construction arrière (4) est conçue comme dispositif à multiples points de pivotement avec un axe instantané de rotation (M₁) comme point de pivotement instantané, et la construction arrière (4) est positionnée sur le cadre principal (2) de sorte que le la bicyclette (10) présente un angle de ressort de rappel (α) compris entre 5° et 30°, de préférence entre 10° et 20° et plus préférablement d'environ 15° lorsque la bicyclette (10) est soumise à une charge statique conduisant à une plage de trajet de ressort négative comprise entre 10% et 35% du trajet de ressort global.

2. Construction arrière d'une bicyclette actionnée par moteur électrique avec un dispositif d'entraînement (1) selon la revendication 1, dans laquelle le palier de bras oscillant (3) est positionné sur le cadre principal (2) de sorte que la bicyclette (10) présente un angle de ressort de rappel (a) compris entre 5° et 30°, de préférence entre 10° et 20° et plus préférablement d'environ 15° lorsque la bicyclette (10) est soumise à une charge statique conduisant à une plage de trajet de ressort négative comprise entre 10% et 35% du trajet de ressort global.

3. Construction arrière d'une bicyclette actionnée par moteur électrique avec un dispositif d'entraînement (1) selon l'une des revendications précédentes, dans laquelle la distance radiale (R₁) entre l'axe central (14) du premier arbre d'entraînement (6) et l'axe central (13) de l'arbre de sortie (9) est comprise entre 200 mm et 300 mm, et de préférence entre 100 mm et 200 mm.

4. Construction arrière d'une bicyclette actionnée par moteur électrique avec un dispositif d'entraînement (1) selon l'une des revendications précédentes, dans laquelle la distance radiale (R₂) entre l'axe central (16) du palier de bras oscillant (3) et l'axe central (13) de l'arbre de sortie (9) est inférieure à 200 mm, de préférence inférieure à 100 mm, et plus préférentiellement inférieure à 50 mm.

5. Construction arrière d'une bicyclette actionnée par moteur électrique avec un dispositif d'entraînement (1) selon l'une des revendications précédentes, dans laquelle l'axe central (16) du palier de bras oscillant (3) est disposé, par rapport à un plan (60) parallèle à la surface de la route (122), au-dessus de l'axe central (13) de la prise de force (8).

6. Construction arrière d'une bicyclette actionnée par moteur électrique avec un dispositif d'entraînement (1) selon l'une des revendications 1 à 4, dans laquelle l'axe central (16) du palier de bras oscillant (3) est disposé, par rapport à un plan (60) parallèle au plan de la route (122), au-dessous de l'axe central (13) de la prise de force (8).

7. Construction arrière d'une bicyclette actionnée par moteur électrique avec un dispositif d'entraînement (1) selon l'une des revendications 1 à 4, dans laquelle la distance radiale (R₂) entre l'axe central (13) de l'arbre de sortie (9) et l'axe central (16) du palier du bras oscillant (3) est égale à zéro, de sorte que l'axe central (13) de l'arbre de sortie (9) et l'axe central (16) du palier du bras oscillant (3) soient disposés de manière concentrique.

8. Construction arrière d'une bicyclette actionnée par moteur électrique avec un dispositif d'entraînement (1) selon l'une des revendications précédentes, dans laquelle la prise de force (8) et le moteur électrique central (7) sont disposés l'un par rapport à l'autre de sorte ce que l'axe central (13) de la prise de force (8) et l'axe central (49) d'un arbre de sortie (44) du moteur électrique central (7) soient disposés de manière concentrique.

9. Construction arrière d'une bicyclette actionnée par moteur électrique avec un dispositif d'entraînement (1) selon l'une des revendications précédentes, dans laquelle la prise de force (8) transmet, au moyen d'un moyen de transmission de force (90, 99), en particulier au moyen de une chaîne (90) ou d'une courroie dentée (99) ou d'une courroie trapézoïdale, la force d'entraînement (Fc) à la roue à entraîner (96) de la bicyclette (10), et le moyen de transmission de force (90, 99) est disposé entre la prise de force (8) et la roue (96) de sorte qu'une force (F_{A}) soit exercée, au moyen de l'exercice d'une force de traction sur un brin de charge (92) du moyen de transmission de force (90, 99), sur l'axe arrière (115) dont la ligne d'action de force (95) s'étend au-dessous de l'axe central (16) du palier du bras oscillant (2) ou au-dessous de l'axe instantané de rotation lorsque la bicyclette (10) est soumise à une charge statique conduisant à une plage de trajet de ressort négative comprise entre 10% et 35% du trajet de ressort global.

10. Construction arrière d'une bicyclette actionnée par moteur électrique avec un dispositif d'entraînement (1) selon l'une des revendications précédentes, dans laquelle le dispositif d'entraînement (1) est disposé de manière immobile sur le cadre principal (2).

11. Utilisation d'une construction arrière d'une bicyclette actionnée par moteur électrique avec un dispositif d'entraînement (1) selon l'une des revendications 1 à 10 dans le cas d'une bicyclette à moteur électrique (10).

12. Bicyclette actionnée par moteur électrique (10) avec une construction arrière d'une bicyclette actionnée par moteur électrique avec un dispositif d'entraînement (1) selon l'une des revendications 1 à 10.

13. Cadre de bicyclette avec un cadre principal (2) présentant un palier de bras oscillant (3), une construction arrière (4) disposée sur le palier du bras oscillant (3), et la construction arrière d'une bicyclette actionnée par moteur électrique avec un dispositif d'entraînement (1) selon l'une des revendications 1 à 10.
